# EUROPEAN PATENT APPLICATION

(11) **EP 4 745 664 A1**
(43) Date of publication of application: **20.05.2026**
(21) Application number: 24926691.7
(22) Date of filing: 03.09.2024
(51) Int. Cl.: G03B 9/06, G03B 30/00

(54) **VARIABLE APERTURE, CAMERA MODULE AND ELECTRONIC DEVICE**

(30) Priority: 26.02.2024 CN 202410211375; 29.03.2024 CN 202410385709
(71) Applicant: Huawei Technologies Co., Ltd., Shenzhen, Guangdong 518129 (CN)
(72) Inventor: CHU, Yutian, Shenzhen, Guangdong 518129 (CN); LI, Zhangcheng, Shenzhen, Guangdong 518129 (CN); FENG, Minyang, Shenzhen, Guangdong 518129 (CN); SUN, Zhanli, Shenzhen, Guangdong 518129 (CN)
(74) Representative: Epping - Hermann - Fischer
(86) International application number: PCT/CN2024/116612
(87) International publication number: WO 2025/179824

(57) **Abstract**

A variable aperture (20), a camera module (10), and an electronic device (01) are provided, and relate to the field of image shooting technologies, to alleviate a problem that a variable aperture (20) has a complex structure. The variable aperture (20) includes a fastening base (21), a rotating carrier (22), a plurality of blades (23), and at least one drive component (24). The drive component (24) includes a magnet component (241) and a coil (242). The rotating carrier (22) is located in the fastening base (21), and the rotating carrier (22) is rotatably connected to the fastening base (21). In the drive component (24), the magnet component (241) is disposed on a side that is of the rotating carrier (22) and that is away from the blade (23), and the magnet component (241) is connected to the rotating carrier (22). The coil (242) is disposed on a side that is of the magnet component (241) and that faces the fastening base (21). The variable aperture (20) has a simple structure and a small size. This facilitates a miniaturization design of the entire camera module (10) and improves an integration level of the electronic device (01).

## Description

This application claims priorities to Chinese Patent Application No. 202410211375.6, filed with the China National Intellectual Property Administration on February 26, 2024 and entitled "VARIABLE APERTURE, CAMERA MODULE, AND ELECTRONIC DEVICE", and to Chinese Patent Application No. 202410385709.1, filed with the China National Intellectual Property Administration on March 29, 2024 and entitled "VARIABLE APERTURE, CAMERA MODULE, AND ELECTRONIC DEVICE", both of which are incorporated herein by reference in their entireties.

### TECHNICAL FIELD

This application relates to the field of image shooting technologies, and in particular, to a variable aperture, a camera module, and an electronic device.

### BACKGROUND

With continuous development of electronic device integration technologies, photographing and image shooting become one of common functions of electronic devices. Therefore, cameras are increasingly widely used in the electronic devices. The camera has a variable aperture, and the variable aperture has an aperture hole with an adjustable hole diameter. An amount of external light entering the camera may be adjusted by changing a size of the aperture hole. Currently, as functions of the electronic device become increasingly complex, there is an increasingly high integration level requirement on the electronic device. However, a structure of the variable aperture is relatively complex. This is not conducive to a miniaturization design of the camera, reducing an integration level of the electronic device.

### SUMMARY

This application provides a variable aperture, a camera module, and an electronic device, to alleviate a problem that a variable aperture has a complex structure.

To achieve the foregoing objective, this application uses the following technical solutions.

According to one aspect of this application, a variable aperture is provided. The variable aperture includes a fastening base, a rotating carrier, a plurality of blades, and at least one drive component. The drive component includes a magnet component and a coil. The fastening base has a first light transmitting hole. The fastening base includes a bottom plate and a side plate, and the side plate is disposed on the bottom plate and encloses a periphery of the first light transmitting hole. The side plate is provided with a first opening, and the first opening penetrates the side plate in a direction perpendicular to the bottom plate. In addition, the rotating carrier is located in the fastening base, and the rotating carrier is rotatably connected to the fastening base. The rotating carrier includes an annular portion and a convex lug, the annular portion is disposed around the periphery of the first light transmitting hole, and the convex lug is disposed on a side wall of the annular portion. The convex lug is located in the first opening, and a side surface of the convex lug is exposed from the first opening. The plurality of blades are disposed on the rotating carrier, and the blades are slidably connected to the annular portion and rotatably connected to the fastening base. The plurality of blades are distributed annularly to enclose an aperture hole, and the aperture hole is in communication with the first light transmitting hole. In the foregoing drive component, the magnet component is disposed on a side that is of the convex lug and that is away from the blade. The coil is disposed on a side that is of the magnet component and that faces the fastening base.

In conclusion, the rotating carrier is located in the fastening base and rotatably connected to the fastening base. In addition, the blades are slidably connected to the annular portion and rotatably connected to the fastening base. In this case, when the rotating carrier rotates relative to the fastening base, the blade may be driven to slide relative to the rotating carrier, and the blade may be further caused to rotate relative to the fastening base. Based on this, a hole diameter of the aperture hole enclosed by the plurality of blades that are distributed annularly may change with rotation of the rotating carrier, to adjust the hole diameter of the aperture hole. On this basis, to drive the rotating carrier to rotate, it can be learned from the foregoing that the drive component includes the magnet component and the coil. The magnet component is disposed on a side that is of the convex lug and that is away from the blade. The coil is disposed on a side that is of the magnet component and that faces the fastening base. In this case, a magnetic field is generated between the coil and the magnet component by energizing the coil. Under the effect of the magnetic field, the magnet component disposed on a mover (that is, the rotating carrier) may be driven to move relative to the coil. In addition, the rotating carrier is rotatably connected to the fastening base, so that the rotating carrier may be driven to rotate relative to the fastening base by using the magnet component.

In this way, in the variable aperture provided in embodiments of this application, because the magnet component is disposed on the rotating carrier used as a mover, the variable aperture may be a moving-magnet variable aperture. Based on this, the coil that needs power supply does not need to be disposed on the mover (that is, a moving-coil variable aperture), so that an electrical connection structure of the variable aperture can be simplified. In addition, in this application, the plurality of blades can be driven to move by using the rotating carrier through only rotatable cooperation between the rotating carrier used as a mover and the fastening base used as a stator, to adjust the hole diameter of the aperture hole, thereby reducing a quantity of components used to adjust the hole diameter of the variable aperture, and simplifying a structure of the variable aperture. On this basis, the rotating carrier is disposed in the fastening base, so that a thickness of the variable aperture can be reduced. In addition, the magnet component is disposed on the side that is of the convex lug and that is away from the blade, and the coil is disposed on the side that is of the magnet component and that faces the fastening base. Compared with that in a solution in which a magnet and a coil are disposed on a periphery of a rotating carrier, an area of the variable aperture in a transverse direction (perpendicular to an optical axis of the variable aperture) can be reduced, thereby reducing a size of the variable aperture. In addition, the convex lug is embedded in the first opening on the side plate and connected to the magnet component, and the side surface of the convex lug is exposed from the first opening. Through disposing of the first opening, the side plate of the fastening base can avoid positions of the convex lug of the rotating carrier and the magnet component connected to the convex lug, and a weight of the fastening base can be reduced. In this case, the structure of the variable aperture is simplified, and the thickness, the transverse area, and a weight of the variable aperture are reduced, thereby facilitating a miniaturization design of an entire camera module, and improving an integration level of an electronic device.

In addition, when an image sensor in the camera module having the variable aperture has a relatively large target surface, a dimension of a lens assembly of the camera module in an optical axis direction is relatively large. Therefore, for the image sensor with the relatively large target surface, a size of the entire camera module can be effectively reduced by using the variable aperture provided in embodiments of this application.

In an optional implementation, the magnet component may include a plurality of magnets, and the plurality of magnets may be of a Halbach array structure. A surface that is of the magnet component having the Halbach array structure and that faces the coil has a relatively high magnetic field strength, so that a very small current can push the rotating carrier connected to the magnet component, thereby reducing power consumption.

In an optional implementation, the fastening base includes a boss. The boss is disposed on the bottom plate, and the first light transmitting hole penetrates the boss and the bottom plate. The side plate, a side wall of the boss, and the bottom plate enclose a first mounting groove, and at least a part of the rotating carrier is located in the first mounting groove. In this way, the side plate, the side wall of the boss, and the bottom plate enclose the first mounting groove, and the rotating carrier can be disposed in the fastening base, so that thicknesses of the rotating carrier and the fastening base can overlap, thereby reducing the thickness of the variable aperture.

In an optional implementation, the annular portion is located in the first mounting groove and disposed around a periphery of the boss, and the first opening is in communication with the first mounting groove, so that structural interference with the annular portion and the convex lug can be avoided.

In an optional implementation, there may be a stroke gap between a side wall of the first opening and the convex lug. Therefore, in a rotation direction of the rotating carrier, a part of an opening length of the first opening may be a rotation stroke of the rotating carrier. When the rotating carrier abuts against the side wall of the first opening, the rotating carrier rotates to a maximum stroke.

In an optional implementation, the variable aperture further includes an FPC, the FPC is disposed on a side that is of the fastening base and that is away from the blade, and the FPC is connected to the fastening base. The coil passes through the fastening base and is disposed on a side that is of the FPC and that faces the rotating carrier, and the coil is connected to the FPC. In this way, the FPC is disposed on the side that is of the fastening base and that is away from the blade. Compared with that in a solution in which an FPC is disposed in an arc shape around a periphery of a mover, the FPC may be disposed in a flat plate structure, thereby simplifying a manufacturing process of the FPC. In addition, the coil passes through the fastening base, so that a thickness of the coil overlaps a part of a thickness of the fastening base, thereby helping reduce the thickness of the variable aperture. In addition, the coil that needs power supply is disposed on the side that is of the FPC and that faces the rotating carrier, and the coil is connected to the FPC, so that the coil is disposed opposite to the magnet component, and power is directly supplied to the coil by using a metal ground trace on the FPC, thereby simplifying the electrical connection structure of the variable aperture.

In an optional implementation, the fastening base includes a first plastic part and a first metal support. The first metal support is embedded in the first plastic part, and the first metal support and the first plastic part are connected to form a first integrated mechanical part. In this way, the first integrated mechanical part may be formed by using an insert molding process. Because the fastening base has the first metal support, a mechanical strength of the fastening base can be increased, and in a process of performing a reliability test (such as a rolling test or a drop test) on the variable aperture and a use process of a user, when a collision occurs on the fastening base, a probability that the fastening base is damaged can be reduced, thereby prolonging a service life of a product. In addition, the first metal support may be further grounded on the FPC. For example, the first metal support may be electrically connected to a copper exposure region on the FPC by using a conductive adhesive, to implement grounding of the first metal support, thereby reducing electromagnetic interference.

In an optional implementation, the first plastic part has a first hollow zone, a part of a surface of the first metal support is exposed from the first hollow zone, and the surface is used to create a product identifier. In this way, the product identifier representing product-related information may be directly prepared on the first metal support, and a magnetic conductive sheet used to create the product identifier does not need to be separately disposed, thereby simplifying a manufacturing process.

In an optional implementation, the coil is disposed on the fastening base, and the coil is directly connected to the fastening base. The fastening base used as a stator is in a static state relative to the rotating carrier in a process of changing the hole diameter of the aperture hole of the variable aperture. In this way, the coil disposed on the fastening base may be in a static state relative to the magnet component disposed on the rotating carrier, so that the variable aperture is a moving-magnet variable aperture.

In an optional implementation, the fastening base includes a first plastic part, a first metal support, a metal ground trace, a metal signal trace, a metal ground terminal, and a metal signal terminal. The first metal support, the metal ground trace, and the metal signal trace are embedded in the first plastic part, and the metal signal trace, the metal ground trace, the first metal support, and the first plastic part are connected to form a first integrated mechanical part. Same as described above, the first integrated mechanical part may be formed by using an insert molding process. A technical effect of the first metal support is the same as that described above, and details are not described herein again. In addition, because the fastening base includes the metal ground trace, the metal signal trace, the metal ground terminal, and the metal signal terminal, the metal ground trace, the metal signal trace, the metal ground terminal, and the metal signal terminal may replace the foregoing FPC. The metal ground terminal is connected to the metal ground trace, so that the first metal support may be electrically connected to a main board of the camera module through the metal ground trace and the metal ground terminal, to implement grounding of the first metal support. In addition, the variable aperture may further include a rotation control chip for controlling a rotation position of the rotating shaft carrier. The rotation control chip is electrically connected to the metal signal trace. Because the metal signal terminal is connected to the metal signal trace, the rotation control chip is electrically connected to the main board of the camera module through the metal signal terminal and the metal signal trace, so that a processor on the main board can transmit a control signal to the rotation control chip. In addition, the coil directly connected to the fastening base may be further electrically connected to the metal signal trace in the fastening base, to supply power to the coil. In this case, the coil may be electrically connected to the entire fastening base through the metal signal trace, so that no circuit board configured to supply power to the coil needs to be additionally disposed.

In an optional implementation, the variable aperture further includes a cover plate, the cover plate is disposed on a side that is of the plurality of blades and that is away from the rotating carrier, and the cover plate covers the fastening base. The cover plate includes a third plastic part, a third metal support, and a first soma. The third metal support is embedded in the third plastic part, and the third metal support and the third plastic part are connected to form a third integrated mechanical part. Similarly, the third integrated mechanical part may be formed by using an insert molding process. Because the cover plate has the third metal support, a mechanical strength of the cover plate can be increased, and in a process of performing a reliability test (such as a rolling test or a drop test) on the variable aperture and a use process of a user, when a collision occurs on the cover plate, a probability that the cover plate is damaged can be reduced, thereby prolonging a service life of a product. In addition, the third metal support is connected to the first metal support. For example, the third metal support in the cover plate may be connected to the first metal support in the fastening base through welding, so that reliability of a connection between the cover plate and the fastening base can be improved, and a probability that the cover plate falls off can be reduced. In some embodiments of this application, a plurality of welding positions may be provided on the cover plate, and the plurality of welding positions may be provided around the aperture hole, so that the connection between the cover plate and the fastening base can be stable. In addition, the first soma is stacked on a side that is of the third integrated mechanical part and that is away from the blade, and the first soma may block a part of a structure of the blade below the cover plate, so that a side surface that is of the first soma and that is away from the third integrated structure is used as a user-visible appearance surface, thereby achieving an effect of decoration and improving appearance quality, and increasing a control area of a product appearance to a maximum extent.

In addition, the third metal support in the cover plate is located in the third plastic part, and the cover plate is disposed on a side that is of the plurality of blades and that is away from the rotating carrier. In this way, in a rotation process of the blade, a component that is directly in contact with the blade and rubs the blade is the third plastic part in the cover plate. Compared with a surface of a metal material, a surface of the third plastic part may have a relatively small friction coefficient, so that a friction force between the blade and the third plastic part can be reduced, thereby further reducing a blade wear probability.

In an optional implementation, the third metal support is electrically connected to the first metal support, and the third metal support is grounded through the first metal support. It can be learned from the foregoing that both the cover plate and the fastening base may be prepared by using an insert molding process. In addition, in this case, the third metal support is electrically connected to the first metal support, so that the third metal support can be grounded through the first metal support. In this way, a manufacturing process for grounding of the cover plate may be simplified. In a related technology, a cover plate mainly including a steel plate needs to be electrically connected to a lead-out part of an FPC in a gel dispensing manner for grounding, and then a gel dispensing position is covered with a gel protection adhesive. Compared with the related technology, in this application, only the third metal support in the cover plate needs to be electrically connected to the first metal support in the fastening base, for example, through welding or gel dispensing, so that the lead-out part of the FPC and structures such as a gel dispensing layer and the gel protection adhesive for electrically connecting the lead-out part of the FPC and the cover plate do not need to be additionally disposed, thereby simplifying a structure and reducing a manufacturing process.

In an optional implementation, the cover plate has a second light transmitting hole, and the second light transmitting hole is in communication with the aperture hole. The third metal support has a plurality of hollow portions that penetrate the third metal support, and the hollow portions are disposed on a periphery of the second light transmitting hole. In this way, the second light transmitting hole is in communication with the aperture hole, and the second light transmitting hole may be used to enable external light to enter the aperture hole through the second light transmitting hole. In addition, the plurality of hollow portions are disposed on the third metal support, so that a weight of the entire third metal support can be reduced, thereby reducing the weight of the variable aperture.

In an optional implementation, the variable aperture further includes a second soma, and the second soma is stacked on a side that is of the plurality of blades and that faces the fastening base. The second soma is provided with a third light transmitting hole, and the third light transmitting hole is in communication with the aperture hole. The third light transmitting hole is in communication with the aperture hole, and the third light transmitting hole may be used to enable external light to enter the aperture hole through the third light transmitting hole.

In an optional implementation, a same material is used for the second soma, the first soma, and the blade. A specular reflectance G and an optical density value OD of the material, and an L value, an a value, and a b value in a color triplet of the material are respectively as follows: G≤0.3%; OD≥5.0; L≤8; |a|≤1; and |b|≤1. In this way, materials of the second soma, the first soma, and the blade may all be a super-black material, so that in a moving process of the blade, colors and glosses of parts of the first soma, the second soma, and the blade that can be seen by the user are consistent, thereby reducing a probability of a color difference between the three components and improving appearance quality.

In an optional implementation, a modulus of the material of the second soma, the first soma, and the blade is greater than or equal to 3000 MPa, a yield strength is greater than or equal to 80 MPa, and an elongation at break is greater than or equal to 10%. In this way, in a reliability test process, two or five rounds of drop tests can be passed, and 500 roller tests can be passed. If the roller test is performed more than 1000 times, there is a specific risk. In addition, a service life can reach 250,000 times.

In an optional implementation, a part that is of the fastening base and that is disposed around a periphery of the rotating carrier protrudes from a surface that is of the cover plate and that is away from the blade. In this way, the part that is of the fastening base and that is around the periphery of the rotating carrier, for example, the side plate, may be in contact with a lens covering the camera module or another decorative component on a rear housing, so that in a product test process or a use process of the user, a probability of deformation that occurs due to direct contact between the cover plate and the lens or the another apparatus component can be reduced, and a service life and reliability of a product can be improved.

In an optional implementation, the drive component may further include a first magnetic conductive sheet, the first magnetic conductive sheet may be disposed on a side that is of the bottom plate of the fastening base and that faces the rotating carrier, and the first magnetic conductive sheet is used for attraction with the magnet component. The magnetic conductive sheet is also referred to as a magnetic attractive sheet, and has a high magnetic permeability, a low resistivity, and a small iron loss. Based on this, in a thickness direction of the variable aperture, the first magnetic conductive sheet can attract the magnet component. In addition, a vertical projection of the first opening on the side wall of the boss overlaps a vertical projection of the first magnetic conductive sheet on the side wall of the boss. It can be learned from the foregoing that, in the rotation direction of the rotating carrier, the opening length of the first opening may be the rotation stroke of the rotating carrier. Therefore, when the vertical projection of the first opening on the side wall of the boss overlaps the vertical projection of the first magnetic conductive sheet on the side wall of the boss, the first magnetic conductive sheet may be disposed within a stroke range of the rotating carrier. In this way, in a rotation process of the rotating carrier, the magnet component is attracted by the first magnetic conductive sheet in the thickness direction of the variable aperture, so that separation between the rotating carrier and the fastening base in a rotation process of the camera module can be reduced, thereby improving reliability of the variable aperture.

In addition, when a quantity and positions of first magnetic conductive sheets and a spacing between the first magnetic conductive sheet and the magnet component are adjusted, an attraction force between the first magnetic conductive sheet and the magnet component can be adjusted. In this case, when an attraction force between all first magnetic conductive sheets in the variable aperture and the magnet component can reach about 10 times a weight of the rotating carrier and the magnet component, a friction force between the rotating carrier and the fastening base may be increased. In this case, when the rotating carrier rotates to drive the aperture hole formed through movement of the plurality of blades to reach an f-stop, for example, a maximum f-stop, because the friction force between the rotating carrier and the fastening base is relatively large, it is difficult for the rotating carrier to further rotate relative to the fastening base, and therefore power supply to the coil may be terminated, so that positions of the rotating carrier and the fastening base are relatively fixed, thereby achieving aperture self-locking. In this way, when the user shoots a photo or a video in a fixed scenario, and does not need to change the aperture, because the aperture is self-locked and the coil is in a power-off state, power consumption can be reduced.

In an optional implementation, a second mounting groove is provided on a part that is of the bottom plate and that is used as a groove bottom of the first mounting groove, and the first magnetic conductive sheet is located in the second mounting groove. The second mounting groove is disposed at an end that is of the coil and that faces the boss. The second mounting groove is provided on the bottom plate, so that the first magnetic conductive sheet located in the second mounting groove can be embedded in the bottom plate of the fastening base. In this way, a thickness of the first magnetic conductive sheet overlaps a partial thickness of the bottom plate, thereby helping reduce the thickness of the variable aperture. In addition, the second mounting groove is disposed at the end that is of the coil and that faces the boss, so that the first magnetic conductive sheet located in the second mounting groove is located at the end that is of the coil and that faces the boss, and is closer to the magnetic attractive component.

In an optional implementation, the drive component includes two first magnetic conductive sheets, and the end that is of the coil and that faces the boss is located between the two first magnetic conductive sheets. In this way, an attraction force between all the first magnetic conductive sheets and the magnetic attractive component can be increased by increasing a quantity of first magnetic conductive sheets, thereby helping achieve aperture self-locking after the coil is powered off.

In an optional implementation, the side wall of the boss includes a first semi-ring side wall and a second semi-ring side wall that are connected. In addition, the variable aperture further includes a second magnetic conductive sheet and a first rolling part. The second magnetic conductive sheet is disposed on the first semi-ring side wall, and the second magnetic conductive sheet is used for attraction with the magnet component. A vertical projection of the first opening on the first semi-ring side wall overlaps a vertical projection of the first magnetic conductive sheet on the first semi-ring side wall. The first rolling part is disposed between the rotating carrier and the bottom plate, the first rolling part is located on a side on which the second semi-ring side wall is located, the rotating carrier and the fastening base are in contact with the first rolling part, and the rotating carrier is rotatably connected to the fastening base through the first rolling part.

In this way, because the second magnetic conductive sheet is disposed on the first semi-ring side wall, when the second magnetic conductive sheet and the magnet component attract each other, the rotating carrier moves toward a position of the second semi-ring side wall of the fastening base. Because the first rolling part is located on the side on which the second semi-ring side wall is located, the rotating carrier and the fastening base may be in contact with the first rolling part, that is, the first rolling part is in a state of zero fitting with both the rotating carrier and the fastening base. In this case, when the rotating carrier is rotatably connected to the fastening base through the first rolling part, because the rotating carrier and the fastening base may be in contact with the first rolling part, the rotating carrier may always lean on the first rolling part in a rotation process, and rotate relative to the fastening base, thereby improving stability of the rotating carrier in the rotation process and consistency of the rotating carrier rotating to various angles, and improving product reliability.

In an optional implementation, the first rolling part may include one ball or one roller. Alternatively, the first rolling part may include a plurality of balls or a plurality of balls. For example, the first rolling part includes a plurality of balls. The plurality of balls may be arranged in the thickness direction of the variable aperture.

In an optional implementation, the variable aperture further includes a second rolling part, the second rolling part may be disposed between the rotating carrier and the bottom plate, and the second rolling part is located on a side on which the first semi-ring side wall is located. There is an adjustment gap H1 between the second rolling part and the rotating carrier, and 30 µm≤H1≤70 µm. It can be learned from the foregoing that, when the second magnetic conductive sheet and the magnet component attract each other, the rotating carrier moves toward the position of the second semi-ring side wall of the fastening base. In this case, there may be the adjustment gap H1 between the second rolling part located on the side on which the first semi-ring side wall is located and the rotating carrier. In this way, in a process of performing a reliability test (such as a rolling test or a drop test) on the variable aperture and a use process of the user, when the rotating carrier has relatively large displacement in a horizontal plane (perpendicular to the optical axis of the variable aperture), a side that is of the rotating carrier and that is close to the second rolling part may be in contact with the second rolling part, so that the second rolling part limits further displacement of the rotating carrier, thereby reducing a displacement amount of the rotating carrier. This avoids a phenomenon that the plurality of blades slidably connected to the rotating carrier are damaged because the blades are pulled when the rotating carrier has relatively large displacement.

In an optional implementation, the second rolling part may include one ball or one roller. Alternatively, the second rolling part may include a plurality of balls or a plurality of balls. For example, the second rolling part includes a plurality of balls. The plurality of balls may be arranged in the thickness direction of the variable aperture.

In an optional implementation, the variable aperture includes two drive components, two first rolling parts, and two second rolling parts. The two drive components are respectively a first drive component and a second drive component, the first drive component is disposed on the side on which the first semi-ring side wall is located, and the second drive component is disposed on the side on which the second semi-ring side wall is located. The first drive component is located between the two second rolling parts. The second drive component is located between the two first rolling parts. In this way, the first drive component is disposed on the side on which the first semi-ring side wall of the boss is located, and the second drive component is disposed on the side on which the second semi-ring side wall is located, so that the rotating carrier can be evenly subject to a force in a rotation process. In addition, the second drive component is disposed between the two first rolling parts, and a quantity of first rolling parts is increased, so that the rotating carrier can be in contact with the first rolling parts on both sides of the first drive component, thereby helping further improve consistency, stability, and reliability of movement. In addition, the first drive component is disposed between the two second rolling parts, and a quantity of the second rolling parts is increased, so that displacement of the rotating carrier can be further limited in a process of performing a reliability test (such as a rolling test or a drop test) on the variable aperture and a use process of the user, thereby effectively reducing a displacement amount of the rotating carrier.

In an optional implementation, the rotating carrier includes a second plastic part and a second metal support. The second metal support is embedded in the second plastic part, and the second metal support and the second plastic part are connected to form a second integrated mechanical part. In this way, the second integrated mechanical part may be formed by using an insert molding process. Because the rotating carrier has the second metal support, a mechanical strength of the rotating carrier can be increased, and in a process of performing a reliability test (such as a rolling test or a drop test) on the variable aperture and a use process of the user, when a collision occurs on the rotating carrier, a probability that the rotating carrier is damaged can be reduced, thereby prolonging a service life of a product. In addition, the magnet component and the second metal support are connected to each other and attract each other. In this way, for example, gel may be dispensed on a side that is of the second metal support and that faces the magnet component, so that the magnet component is connected to the second metal support. On this basis, because the second metal support can be attracted by the magnet component, reliability of a connection between the component and the second metal support in this case is improved. In addition, separate disposing of a magnetic conductive sheet for connecting the rotating carrier and the magnet component may be avoided, thereby simplifying a manufacturing process.

In an optional implementation, in a same drive component, a vertical projection of the magnet component on the rotating carrier overlaps a vertical projection of the coil on the rotating carrier, so that in the same drive component, positions of the magnet component and the coil are corresponding. In this way, a magnetic field can be more easily generated between the energized coil and the magnet component.

In an optional implementation, the fastening base further includes a bonding structure, and the bonding structure is disposed on a surface that is of the bottom plate and that is away from the side plate. Both the bonding structure and the surface that is of the bottom plate and that is away from the side plate may be connected to a lens assembly located below the variable aperture. In this way, a connection surface between the variable aperture and the lens assembly may be an uneven surface, to improve bonding stability.

In an optional implementation, a vertical projection of the bonding structure on the bottom plate is in a shape of a sector, the sector has a first arc-shaped edge and a second arc-shaped edge, and an arc length of the first arc-shaped edge is greater than an arc length of the second arc-shaped edge. The first arc-shaped edge is provided farther away from the boss than the second arc-shaped edge. In this way, the bonding structure may be a dovetail structure, and a bonding groove in which the lens assembly fits the bonding structure may be a dovetail groove that matches the dovetail structure. In this case, when the camera module works, the variable aperture is in a horizontal plane (a surface perpendicular to the optical axis of the variable aperture), and cutting in the horizontal plane can be prevented in both an X direction and a Y direction. In addition, in a rotation direction of the blade in the variable aperture, a contact area between a side wall of the dovetail structure and the dovetail groove is relatively large, and the variable aperture may be effectively limited, to limit a position of the variable aperture.

According to another aspect of this application, a camera module is provided, including a lens assembly and any variable aperture described above. The variable aperture is disposed on a light inlet side of the lens assembly. The camera module has a same technical effect as the variable aperture provided in the foregoing embodiment, and details are not described herein again.

According to another aspect of this application, an electronic device is provided. The electronic device includes a rear housing and the camera module described above, and the camera module is disposed on the rear housing. The electronic device has a same technical effect as the variable aperture in the camera module provided in the foregoing embodiment, and details are not described herein again.

### BRIEF DESCRIPTION OF DRAWINGS

FIG. 1 is a diagram of a structure of an electronic device according to an embodiment of this application;
FIG. 2 is a diagram of a structure of the camera module in FIG. 1;
FIG. 3 is an exploded view of a structure of the camera module in FIG. 2;
FIG. 4 is a diagram of a structure of the variable aperture in FIG. 3;
FIG. 5 is an exploded view of a structure of the variable aperture in FIG. 4;
FIG. 6A is a diagram of a partial structure of a variable aperture according to an embodiment of this application;
FIG. 6B is a diagram of a structure of the rotating carrier mounted on the fastening base in FIG. 6A;
FIG. 7 is a diagram of another partial structure of a variable aperture according to an embodiment of this application;
FIG. 8 is a diagram of a structure of the blade mounted on the fastening base and the rotating carrier in FIG. 7;
FIG. 9 is a sectional view obtained through cutting along the dashed line O3-O4 in FIG. 8;
FIG. 10 is a diagram of a structure of a magnet component according to an embodiment of this application;
FIG. 11 is a diagram of another structure of a magnet component according to an embodiment of this application;
FIG. 12 is a top view obtained in the Z direction in FIG. 6A;
FIG. 13 is another top view obtained in the Z direction in FIG. 6A;
FIG. 14 is a diagram of another partial structure of a variable aperture according to an embodiment of this application;
FIG. 15 is a diagram of another partial structure of a variable aperture according to an embodiment of this application;
FIG. 16 is another top view obtained in the Z direction in FIG. 6A;
FIG. 17 is a sectional view obtained through cutting along the dashed line O1-O2 in FIG. 16;
FIG. 18 is a diagram of another partial structure of a variable aperture according to an embodiment of this application;
FIG. 19 is another sectional view obtained through cutting along the dashed line O1-O2 in FIG. 16;
FIG. 20 is another top view obtained in the Z direction in FIG. 6A;
FIG. 21 is another exploded view of a structure of the variable aperture in FIG. 4;
FIG. 22 is a bottom view obtained in the Z direction in FIG. 21;
FIG. 23 is a top view obtained in the Z direction in FIG. 21;
FIG. 24 is a diagram of another partial structure of a variable aperture according to an embodiment of this application;
FIG. 25 is an exploded view of a structure of a fastening base according to an embodiment of this application;
FIG. 26 is a diagram of a structure of a fastening base according to an embodiment of this application;
FIG. 27 is a diagram of another structure of a fastening base according to an embodiment of this application;
FIG. 28 is a diagram of a partial structure of a fastening base according to an embodiment of this application;
FIG. 29 is a diagram of another partial structure of a variable aperture according to an embodiment of this application;
FIG. 30 is another exploded view of a structure of a fastening base according to an embodiment of this application;
FIG. 31 is a diagram of another structure of a fastening base according to an embodiment of this application;
FIG. 32 is another diagram of a partial structure of a fastening base according to an embodiment of this application;
FIG. 33 is a diagram of another structure of the variable aperture in FIG. 3;
FIG. 34 is an exploded view of a structure of a rotating carrier according to an embodiment of this application;
FIG. 35 is a diagram of a structure of a rotating carrier according to an embodiment of this application;
FIG. 36 is a bottom view obtained in the Z direction in FIG. 35;
FIG. 37 is another exploded view of a structure of a variable aperture according to an embodiment of this application;
FIG. 38 is an exploded view of a structure of a cover plate according to an embodiment of this application;
FIG. 39 is a diagram of a partial structure of the cover plate in FIG. 38;
FIG. 40 is a diagram of another partial structure of a variable aperture according to an embodiment of this application;
FIG. 41 is a diagram of a structure of a variable aperture according to a related technology;
FIG. 42 is a diagram of another structure of the variable aperture in FIG. 3;
FIG. 43 is a diagram of another structure of the variable aperture in FIG. 3; and
FIG. 44 is a diagram of a connection between a variable aperture and a lens assembly according to an embodiment of this application.

### Reference numerals:

01-electronic device; 02-display; 04-middle frame; 03-rear housing; 06-hole; 05-processor; 10-camera module; 07-lens cover; 08-camera hole; 20-variable aperture; 40-lens assembly; 41-motor; 801-filter; 802-image sensor; 80-circuit board; 21-fastening base; 22-rotating carrier; 23-blade; 24-drive component; 241-magnet component; 242-coil; 25-cover plate; 26-second soma; 100-aperture hole; 101-first light transmitting hole; 103-third light transmitting hole; 28-rotation control chip; 121-first limiting column; 122-second limiting column; 211-bottom plate; 212-boss; 213-side plate; 130-first opening; 110-first mounting groove; 221-annular portion; 222-convex lug; 123-coil mounting hole; 1210-rotating connection hole; 1220-sliding guide groove; 2410-magnet; 27-FPC; 2101-first plastic part; 2102-first metal support; 214-first metal portion; 215-second metal portion; 2151-metal plate; 2152-metal rod; 2153-welding portion; 2100-first integrated mechanical part; 140-first hollow zone; 124-coil mounting groove; 2103-metal ground trace; 2104-metal signal trace; 2105-metal ground terminal; 2106-metal signal terminal; 243-first magnetic conductive sheet; 111-second mounting groove; 2121-first semi-ring side wall; 2122-second semi-ring side wall; 29-second magnetic conductive sheet; 31-first rolling part; 310-first rolling groove; 32-second rolling part; 320-second rolling groove; 2401-first drive component; 2402-second drive component; 2201-second plastic part; 2202-second metal support; 2200-second integrated mechanical part; 2501-third plastic part; 2502-third metal support; 2503-first soma; 102-second light transmitting hole; 2500-third integrated mechanical part; 25011-hollow portion; 34-anti-collision structure; 35-bonding structure; 351-first arc-shaped edge; 352-second arc-shaped edge; and 36-bonding groove.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

The following terms "first", "second", and the like are merely used for ease of description, but should not be understood as indicating or implying relative importance or implying a quantity of indicated technical features. Therefore, a feature limited by "first", "second", or the like may explicitly or implicitly include one or more features. In the descriptions of this application, unless otherwise stated, "a plurality of" means two or more.

In addition, in embodiments of this application, orientation terms such as "upper", "lower", "transverse", "longitudinal", "horizontal", and "vertical" may include but are not limited to definitions based on illustrated orientations in which components in the accompanying drawings are placed. It should be understood that, these directional terms may be relative concepts used for relative description and clarification, and may change accordingly depending on a change in the orientations in which the components are placed in the accompanying drawings.

In this application, unless otherwise expressly specified and limited, the term "connection" should be understood in a broad sense. For example, "connection" may be a fixed mechanical connection, or may be a detachable mechanical connection or an integration. Alternatively, "connection" may be a direct connection, or may be an indirect connection via an intermediate medium.

In addition, unless otherwise expressly specified and limited, the term "electrical connection" should be understood in a broad sense. For example, "electrical connection" may be a direct electrical connection, for example, two components are physically in contact and electrically connected; or may be understood as that in a line structure, different components are electrically connected through a physical line that can transmit an electrical signal, such as a printed circuit board (printed circuit board, PCB) copper foil or a conducting wire, to transmit an electrical signal. Alternatively, "electrical connection" may be an indirect electrical connection between two components via an intermediate medium. Alternatively, "electrical connection" may be an electrical connection between two components in a separated/non-contact manner. For example, two components are electrically connected in a capacitive coupling manner, to transmit an electrical signal.

In embodiments of this application, "perpendicular" and "parallel" are described to respectively represent being roughly perpendicular and being roughly parallel within an allowed error range. The error range may be a range in which a deviation angle is less than or equal to 5°, 8°, or 10° relative to being absolutely perpendicular and being absolutely parallel. This is not specifically limited herein.

In embodiments of this application, orientation terms such as "upper", "lower", "left", and "right" may include but are not limited to definitions based on illustrated orientations in which components in the accompanying drawings are placed. It should be understood that, these directional terms may be relative concepts used for relative description and clarification, and may change accordingly depending on a change in the orientations in which the components are placed in the accompanying drawings.

In the accompanying drawings of embodiments of this application, an assembly is represented by using a guide line with an arrow, a component is represented by using only a guide line, and a hollow structure like an opening or a hole is represented by using a guide line with a wavy line at an end.

An embodiment of this application provides an electronic device. The electronic device may have a display function. The electronic device may be applied to various communication systems or communication protocols, for example, a Bluetooth (Bluetooth, BT) communication technology, a global positioning system (global positioning system, GPS) communication technology, a global system for mobile communications (global system for mobile communications, GSM) communication technology, a wireless fidelity (wireless fidelity, Wi-Fi) communication technology, a wideband code division multiple access (wideband code division multiple access wireless, WCDMA) communication technology, long term evolution (long term evolution, LTE), a 5G communication technology, and another future communication technology. The electronic device in embodiments of this application may be a mobile phone (mobile phone), a tablet computer (pad), a notebook computer, a smart home, a smart wearable device (for example, a smartwatch, a smart band, smart glasses, or a smart helmet), a virtual reality (virtual reality, VR) electronic device, an augmented reality (augmented reality, AR) electronic device, or the like. Alternatively, the electronic device may be a handheld device that has a wireless communication function, a computing device or another processing device connected to a wireless modem, a vehicle-mounted device, an electronic device in a 5G network, an electronic device in a future evolved public land mobile network (public land mobile network, PLMN), or the like. This is not limited in embodiments of this application.

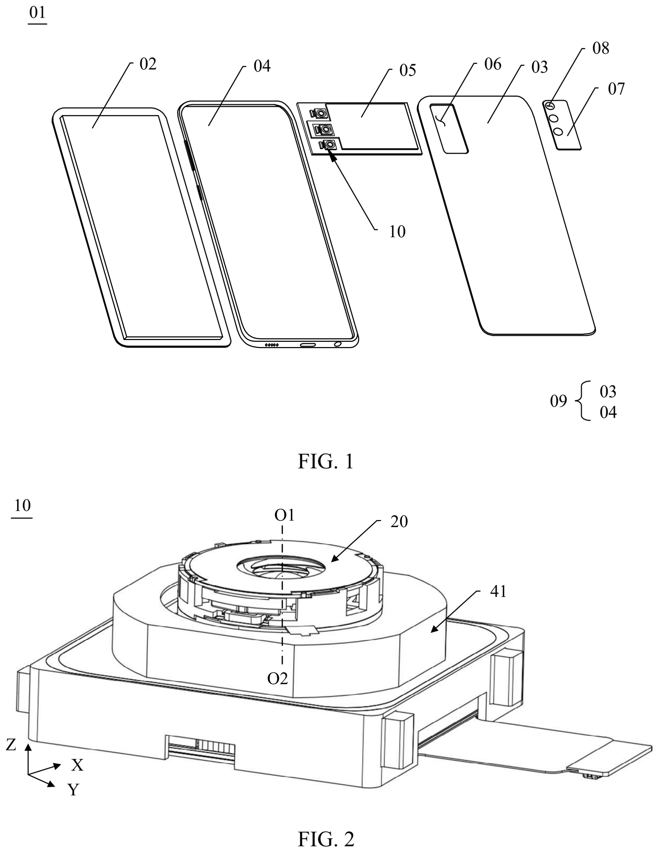

In some embodiments, to enable the electronic device to implement a display function, as shown in FIG. 1, the electronic device 01 provided in embodiments of this application may include a display 02, a rear housing 03 located on a rear surface (which is disposed opposite to a display surface of the display 02) of the display 02, and a middle frame 04 located between the display 02 and the rear housing 03. The middle frame 04 can support the display 02.

The display 02 may be a liquid crystal display (liquid crystal display, LCD), an organic light-emitting diode (organic light-emitting diode, OLED) display, a micro (micro or mini) light-emitting diode (light-emitting diode) display, a quantum dot light-emitting diode (quantum dot light-emitting diode, QLED) display, or the like. A type of the display is not limited in this application.

The electronic device 01 may further include a processor 05 electrically connected to the display 02. The processor 05 may be disposed on a side that is of the middle frame 04 and that is away from the display 02. The rear housing 03 is snapped onto the middle frame 04, so that mounting space is formed between the rear housing 03 and the middle frame 04, to accommodate components such as the processor 05 and a battery. The processor 05 may provide display data for the display 02, to drive the display 02 to display an image.

For example, the processor 05 may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In addition, the electronic device 01 may further include a gyro (gyro) sensor, a Hall sensor (Hall sensor), an interface for external memory, an internal memory, a universal serial bus (universal serial bus, USB) interface, a charging management module, a power management module, a battery, an antenna, a mobile communication module, a wireless communication module, an audio module, a speaker, a receiver, a microphone, a headset jack, a sensor module, a button, a camera, and the like that are electrically connected to the processor 05. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

In some embodiments, to enable the electronic device 01 to implement a photographing function, the electronic device 01 provided in embodiments of this application may further include a camera module 10. The camera module 10 may be a front-facing camera module or a rear-facing camera module. The front-facing camera module may be disposed on the rear surface of the display 02 shown in FIG. 1, and a photosensitive surface of the front-facing camera module is located on a display surface side of the display 02. The rear-facing camera module may be disposed on a side that is of the middle frame 04 and that is away from the display 02, that is, located in the mounting space formed between the middle frame 04 and the rear housing 03. A photosensitive surface of the rear-facing camera module is located on a rear surface of the electronic device 01.

For example, the front-facing camera module or the rear-facing camera module may include a plurality of camera modules 10 shown in FIG. 1. The rear-facing camera module is used as an example. A hole 06 used to expose some camera modules 10 is provided on the rear housing 03. In addition, the electronic device 01 further includes a lens cover 07, which is snapped onto the camera module 10 to protect the camera module 10. The lens cover 07 has a camera hole 08 used to expose a lens of the camera module 10.

The camera module 10 may be one or more of a standard camera module, a long-focus camera module, a wide-angle camera module, an ultra-long-focus camera module, and an ultra-wide-angle camera module. A quantity of camera modules 10 is not limited in this application. FIG. 1 is described by using an example in which the rear-facing camera module includes three camera modules 10.

The following describes a structure of the camera module 10 by using an example. In some embodiments of this application, as shown in FIG. 2, the camera module 10 may include a lens assembly 40, a motor 41, and a variable aperture 20. For ease of description, XYZ coordinate axes are established in the accompanying drawings. A Z direction may be a direction of an optical axis 01-02 of the lens assembly 40, that is, a thickness direction of the camera module 10 and each component in the camera module 10. An XY plane including an X direction and a Y direction may be perpendicular to the direction of the optical axis O1-O2 of the lens assembly 40.

It should be noted that the direction of the optical axis O1-O2 may be a direction in which an optical system of the lens assembly 40 transmits light. For example, for the symmetric lens assembly 40, the optical axis O1-O2 may overlap a rotation center line of the optical system of the lens assembly 40. The optical axis O1-O2 of the lens assembly 40 may be used as an optical axis of the camera module 10, and an optical axis of the variable aperture 20 may overlap the optical axis of the camera module 10.

Based on this, the lens assembly 40 may include one or more optical lenses. The optical lens may be a convex lens or a concave lens, so that the lens assembly 40 having the optical lens may converge light of a photographed object to a focal plane of the camera module 10 for imaging according to a refraction principle of the optical lens. The variable aperture 20 is disposed on a light inlet side of the lens assembly 40. The variable aperture 20 has an aperture hole 100 with an adjustable hole diameter. An amount of external light entering the camera module 10 may be adjusted by changing the hole diameter of the aperture hole 100. For example, when the diameter of the aperture hole 100 is the largest, a largest amount of external light enters the camera module 10. When the diameter of the aperture hole 100 is the smallest, a smallest amount of external light enters the camera module 10.

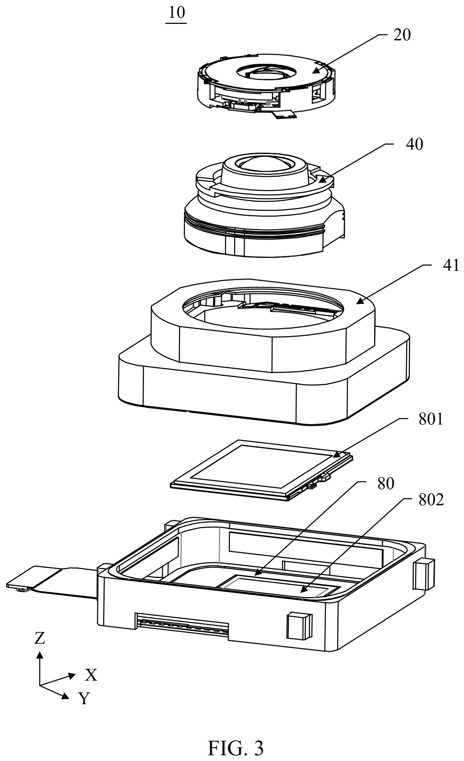

As shown in FIG. 3, for example, the motor 41 can drive the lens assembly 40 to move in the Z direction, to implement automatic focusing (auto focus, AF). Alternatively, for another example, the motor 41 can further drive the lens assembly 40 to move in the XY plane or rotate around the optical axis O-O of the lens assembly 40, to implement optical image stabilization. Alternatively, when the camera module 10 is a fixed-focus camera, the motor 41 may not be disposed in the camera module 10.

On this basis, to enable the camera module 10 to perform optical-to-electrical conversion on light incident to the camera module 10 to generate image information, further as shown in FIG. 3, the camera module 10 may further include a filter 801, an image sensor 802, and a circuit board 80. The image sensor 802 is disposed on the circuit board 80, and the image sensor 802 is electrically connected to the circuit board 80.

For example, the image sensor 802 may be a charge coupled device (charge coupled device, CCD), or may be a complementary metal-oxide-semiconductor (complementary metal-oxide-semiconductor, CMOS) device. The image sensor 802 is disposed at a position of the focal plane of the camera module 10, so that a light image of the photographed object converged by the lens assembly 40 can be received. The image sensor 802 may include a plurality of photosensitive units (not shown in the figure), and each photosensitive unit converts a received amount of light into an electrical signal that is in a corresponding proportion to the amount of light.

In addition, to improve effective resolution and color reproduction of the image sensor 802, the filter 801 may be disposed on a light inlet side of the image sensor 802. For example, the filter 801 may be an infrared filter 801, and the infrared filter 801 may filter out infrared light in ambient light and transmit visible light. Alternatively, for another example, the filter 801 may be a dual-band-pass filter 801, and can select bands in two regions of ambient light to pass through, for example, visible light and infrared light, visible light and ultraviolet light, or ultraviolet light and infrared light.

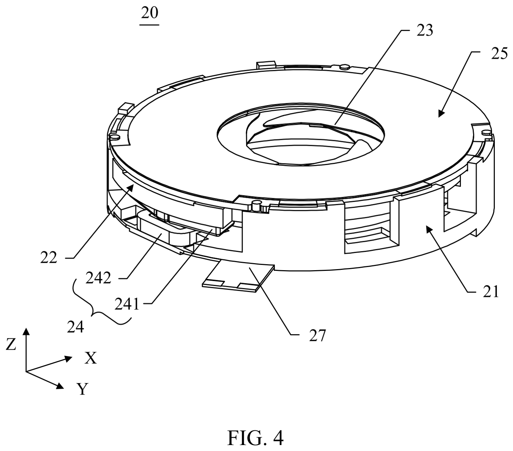

It can be learned from the foregoing that the variable aperture 20 shown in FIG. 3 may adjust the amount of external light that enters the camera module 10. The following describes a structure of the variable aperture 20 by using an example. In some embodiments of this application, as shown in FIG. 4, the variable aperture 20 includes a fastening base 21 (base) 21, a rotating carrier (carrier) 22, a plurality of blades 23, at least one drive component 24, and a cover plate (cover) 25. For example, the drive component 24 may include a magnet component 241 and a coil 242. The cover plate 25 covers the fastening base 21, the cover plate 25 and the fastening base 21 may form accommodating space, and the rotating carrier 22, the blades 23, and the at least one drive component 24 are located in the accommodating space.

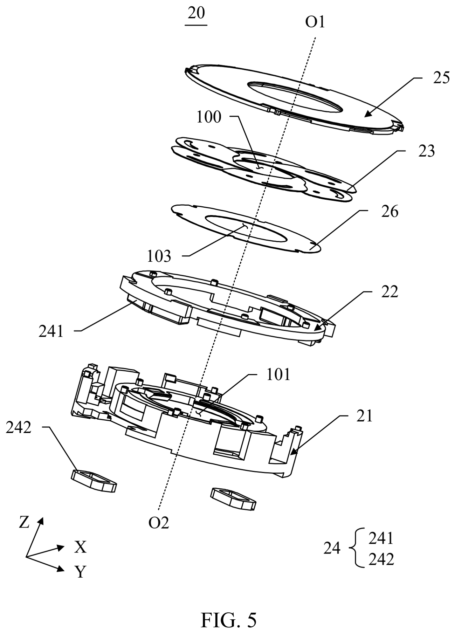

Based on this, as shown in FIG. 5 (which is an exploded view of the variable aperture 20 shown in FIG. 4), the rotating carrier 22 may be located in the fastening base 21, and the rotating carrier 22 is rotatably connected to the fastening base 21. In this case, the rotating carrier 22 may be used as a mover in the variable aperture 20, and the rotating carrier 22 may rotate around the optical axis O1-O2 relative to the fastening base 21. The fastening base 21 may be used as a stator in the variable aperture 20, and is in a static state relative to the rotating carrier 22.

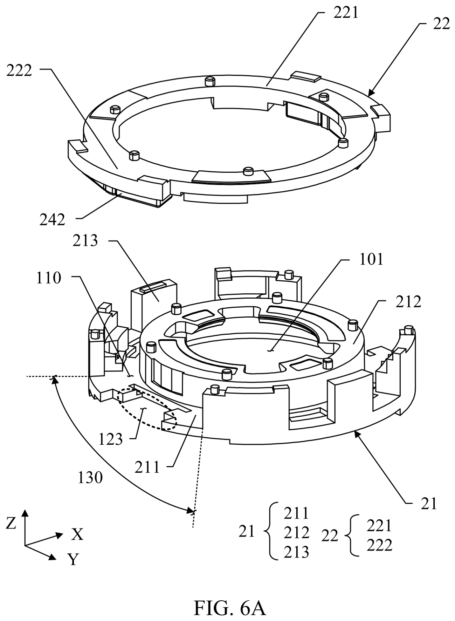

For example, to dispose the rotating carrier 22 in the fastening base 21, as shown in FIG. 6A, the fastening base 21 may include a bottom plate 211, a boss 212, and a side plate 213. The boss 212 may be disposed on the bottom plate 211, the fastening base 21 has a first light transmitting hole 101, and the first light transmitting hole 101 may penetrate the boss 212 and the bottom plate 211. In addition, the side plate 213 is disposed on the bottom plate 211, and the side plate 213 may be disposed around a periphery of the boss 212. The bottom plate 211, the boss 212, and the side plate 213 may be formed through one preparation process, for example, an injection molding process. In this case, the bottom plate 211, the boss 212, and the side plate 213 are connected to form an integrated structure.

Based on this, a first mounting groove 110 may be enclosed by the side plate 213, a side wall of the boss 212, and the bottom plate 211. At least a part of the rotating carrier 22 may be located in the first mounting groove 110, and the rotating carrier 22 located in the first mounting groove 110 may be disposed around a periphery of the first light transmitting hole 101.

In this way, the first mounting groove 110 is disposed on the fastening base 21, so that the rotating carrier 22 located in the first mounting groove 110 may be accommodated in the fastening base 21, and thicknesses (in the Z direction) of the rotating carrier 22 and the fastening base 21 can overlap, thereby reducing a thickness of the variable aperture 20.

On this basis, further as shown in FIG. 6A, the rotating carrier 22 may include an annular portion 221 and a convex lug 222, the convex lug 222 is disposed on a side wall of the annular portion 221, and the convex lug 222 may be connected to the annular portion 221. For example, the convex lug 222 and the annular portion 221 are connected to form an integrated mechanical part through an injection molding process. In addition, the magnet component 241 may be disposed on the convex lug 222, and the magnet component 241 is connected to the convex lug 222, so that the magnet component 241 can be carried by using the convex lug 222. In addition, a first opening 130 is provided on the side plate 213 of the fastening base 21, the first opening 130 penetrates the side plate 213 in a direction perpendicular to the bottom plate 211, and the first opening 130 is in communication with the first mounting groove 110.

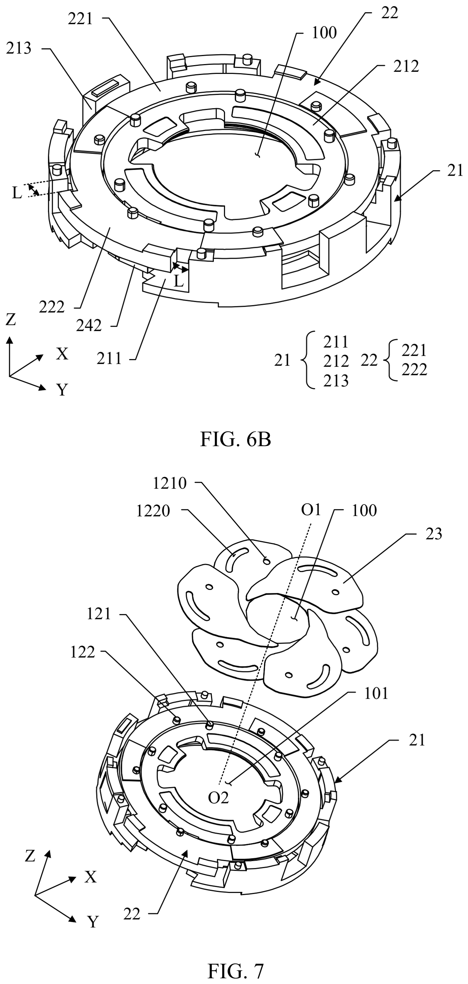

In this case, as shown in FIG. 6B, the annular portion 221 of the rotating carrier 22 is located in the first mounting groove 110 (as shown in FIG. 6A), and the annular portion 221 may be disposed around the periphery of the boss 212 of the fastening base 21. In addition, the convex lug 222 of the rotating carrier 22 and the magnet component 241 connected to the convex lug 222 may be located in the first opening 130 (as shown in FIG. 6A), and a side surface of the convex lug 222 may be further exposed from the first opening 130. In this way, the first opening 130 is provided on the side plate 213 of the fastening base 21, so that the side plate 213 of the fastening base 21 can avoid positions of the convex lug 222 of the rotating carrier 22 and the magnet component 241 connected to the convex lug 222, and a weight of the fastening base can be reduced.

Based on this, there may be a stroke gap L shown in FIG. 6B between a side wall of the first opening 130 (as shown in FIG. 6A) and the convex lug 222. Therefore, in a rotation direction of the rotating carrier 22, a part of an opening length of the first opening 130 may be a rotation stroke of the rotating carrier 22. When the rotating carrier 22 abuts against the side wall of the first opening 130, the rotating carrier 22 rotates to a maximum stroke.

In addition, further as shown in FIG. 5, the cover plate 25 is disposed on a side that is of the plurality of blades 23 and that is away from the rotating carrier 22. The plurality of blades 23 are disposed on the rotating carrier 22, the blades 23 may be slidably connected to the rotating carrier 22, and the blades 23 may be further rotatably connected to the fastening base 21. The plurality of blades 23 are distributed annularly to enclose the aperture hole 100.

For example, the variable aperture 20 may further include a first limiting column 121 shown in FIG. 7 that is disposed on the fastening base 21, and a second limiting column 122 that is disposed on the rotating carrier 22. When the rotating carrier 22 includes the annular portion 221 and the convex lug 222 shown in FIG. 6A, the second limiting column 122 may be disposed on the annular portion 221.

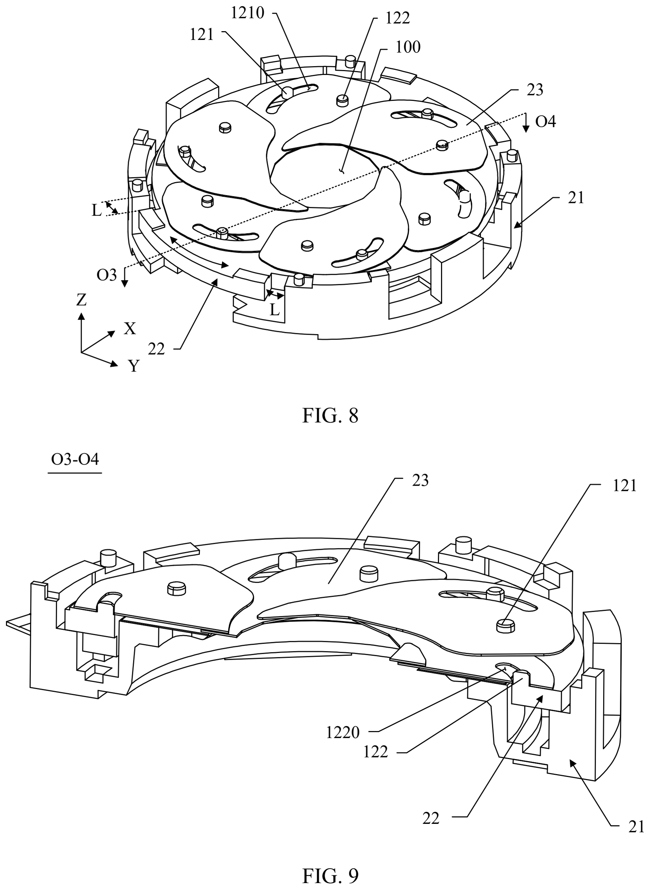

In addition, further as shown in FIG. 7, the blade 23 is provided with a rotating connection hole 1210 and a sliding guide groove 1220 that penetrate the blade 23. As shown in FIG. 8, one blade 23 is connected to one first limiting column 121 and one second limiting column 122. Specifically, as shown in FIG. 9 (a sectional view obtained through cutting along the dashed line O3-O4 in FIG. 8), the first limiting column 121 on the fastening base 21 is disposed in the rotating connection hole 1210 (as shown in FIG. 7) on the blade 23, so that the blade 23 is rotatably connected to the fastening base 21. The second limiting column 122 on the rotating carrier 22 is disposed in the sliding guide groove 1220 on the blade 23, so that the blade 23 is slidably connected to the rotating carrier 22.

In this case, in a process in which the rotating carrier 22 rotates relative to the fastening base 21 in a direction of an arc-shaped arrow in FIG. 8, the second limiting column 122 on the rotating carrier 22 moves along the sliding guide groove 1220 on the blade, so that the blade 23 can be pushed to rotate in an axial direction of the first limiting column 121. In a moving process of the plurality of blades 23, a size of the aperture hole 100 changes accordingly. Two ends of the sliding guide groove 1220 are limiting positions of the second limiting column 122. When the second limiting column 122 slides to either of the two limiting positions, the hole diameter of the aperture hole 100 may change to a maximum hole diameter or a minimum hole diameter.

In addition, further as shown in FIG. 7, the aperture hole 100 may be in communication with the first light transmitting hole 101, so that light transmitted through the aperture hole 100 may be incident to the lens assembly 40 shown in FIG. 3 after passing through the first light transmitting hole 101. Based on this, the minimum hole diameter of the aperture hole 100 may match a first limiting f-stop of the variable aperture 20, for example, a minimum f-stop. In this case, a luminous flux of light entering the lens assembly 40 through the variable aperture 20 may be the smallest. On the contrary, in some embodiments of this application, the maximum hole diameter of the aperture hole 100 may match a second limiting f-stop of the variable aperture 20, for example, a maximum f-stop. In this case, a luminous flux of light entering the lens assembly 40 through the variable aperture 20 may be the largest.

Alternatively, in some other embodiments of this application, further as shown in FIG. 5, the variable aperture 20 may further include a second soma (soma) 26, and the second soma 26 is stacked on a side that is of the plurality of blades 23 and that faces the fastening base 21. The second soma 26 is provided with a third light transmitting hole 103, and the third light transmitting hole 103 is in communication with the aperture hole 100. Light passing through the aperture hole 100 may first pass through the third light transmitting hole 103, and then enter the lens assembly 40 (as shown in FIG. 3) through the first light transmitting hole 101 on the fastening base 21.

Therefore, a hole diameter of the third light transmitting hole 103 may match the second limiting f-stop of the variable aperture 20, for example, the maximum f-stop. In this case, compared with an edge shape of the aperture hole 100 that is enclosed by the plurality of blades 23 and that has the maximum hole diameter, an edge shape of the third light transmitting hole 103 is closer to an ideal circle. When the aperture hole 100 is in a state with the maximum hole diameter, the blade 23 may be located outside an edge of the third light transmitting hole 103, to avoid blocking the third light transmitting hole 103.

In addition, further as shown in FIG. 5, to drive the rotating carrier 22 to rotate along the optical axis O1-O2 relative to the fastening base 21, it can be learned from the foregoing that the variable aperture 20 may further include the drive component 24. The magnet component 241 in the drive component 24 may be disposed on a side that is of the rotating carrier 22 and that is away from the blade 23, and the magnet component 241 is connected to the rotating carrier 22. Based on this, to enable the coil 242 in the drive component 24 to be disposed opposite to the magnet component 241, the coil 242 may be disposed on a side that is of the magnet component 241 and that faces the fastening base 21.

In this way, because the magnet component 241 is connected to the rotating carrier 22 that is used as a mover, when the coil 242 is energized, a magnetic field generated by the coil 242 interacts with a magnetic field generated by the magnet component 241 to generate an acting force. The acting force may enable the magnet component 241 to rotate relative to the coil 242, to drive the rotating carrier 22 connected to the magnet component 241 to rotate relative to the fastening base 21.

On this basis, in some embodiments of this application, in the same drive component 24, a vertical projection of the magnet component 241 on the rotating carrier 22 overlaps a vertical projection of the coil 242 on the rotating carrier 22. In this way, positions of the rotating carrier 22 and the coil 242 in the same drive component 24 are corresponding, so that the magnetic field generated by the energized coil 242 can more easily interact with the magnetic field of the magnet component 241.

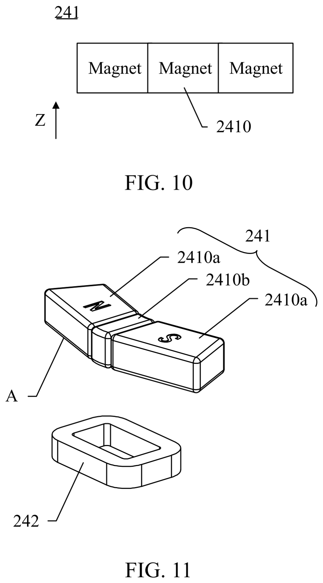

In some embodiments of this application, as shown in FIG. 10, the magnet component 241 may include a plurality of magnets 2410, and magnetic fields generated by the plurality of magnets 2410 may all interact with the magnetic field generated by the energized coil 242 (as shown in FIG. 5), so that a strength of the magnetic field generated by the magnet component 241 can be increased. For example, directions in which N poles of the plurality of magnets 241 in the magnet component 241 point to S poles may all be provided in the Z direction. Neither of the N pole and the S pole of the magnet 241 is shown in FIG. 10. An upper surface and a lower surface of the magnet 2410 in the Z direction may be the N pole and the S pole of the magnet 2410 mutually.

Alternatively, for another example, the plurality of magnets in the magnet component 241 may be arranged in a Halbach array (Halbach array) structure shown in FIG. 11. In the Halbach array structure, directions in which N poles of some magnets 2410a point to S poles are provided in the Z direction, and directions in which N poles of some other magnets 2410b point to S poles (the N poles and the S poles of the magnets 2410b are not shown in the figure) are provided in a direction of a horizontal plane (the XY plane). The magnets 2410a and the magnets 2410b are alternately arranged. In this way, a surface A that is of the magnet component 241 having the Halbach array structure and that faces the coil 242 has a relatively large magnetic field strength, so that when a very small current flows through the coil 242, the rotating carrier 22 connected to the magnet component 241 can be pushed, thereby increasing a pushing force on the rotating carrier 22 and reducing power consumption.

In conclusion, in the variable aperture 20 provided in embodiments of this application, the rotating carrier 22 shown in FIG. 7 is located in the fastening base 21, and the rotating carrier 22 is rotatably connected to the fastening base 21. In addition, the blade 23 shown in FIG. 5 is slidably connected to the rotating carrier 22, and the blade 23 is further rotatably connected to the fastening base 21. In this case, when the rotating carrier 22 rotates relative to the fastening base 21, the rotating carrier 22 may drive the blade 23 to slide relative to the rotating carrier 22, so that the blade 23 rotates relative to the fastening base 21. Based on this, in a rotation process of the rotating carrier 22, the hole diameter of the aperture hole 100 enclosed by the plurality of blades 23 that are distributed annularly may change with rotation of the rotating carrier 22, to adjust the hole diameter of the aperture hole 100 and finally adjust the f-stop of the variable aperture 20.

On this basis, to drive the rotating carrier 22 to rotate, it can be learned from the foregoing that the drive component 24 includes the magnet component 241 and the coil 242 shown in FIG. 5. The magnet component 241 is disposed on a side that is of the rotating carrier 22 and that is away from the blade 23. The coil 242 is disposed on a side that is of the magnet component 241 and that faces the fastening base 21. In this case, the coil 242 is energized, so that a magnetic field generated by the coil 242 interacts with a magnetic field generated by the magnet component 241 to generate an acting force. The acting force may drive the magnet component 241 to drive the rotating carrier 22 to rotate relative to the fastening base 21.

In this way, in the variable aperture 20 provided in embodiments of this application, because the magnet component 241 is disposed on the rotating carrier 22 used as a mover, the variable aperture 20 may be a moving-magnet variable aperture 20. Based on this, the coil 242 that needs power supply does not need to be disposed on the mover (that is, a moving-coil variable aperture), so that an electrical connection structure of the variable aperture 20 can be simplified. In addition, in embodiments provided in this application, the plurality of blades 23 can be driven to move by using the rotating carrier 22 through only rotatable cooperation between the rotating carrier 22 used as a mover and the fastening base 21 used as a stator, to adjust the hole diameter of the aperture hole 100, thereby reducing a quantity of components used to adjust the hole diameter of the variable aperture 20, and simplifying a structure of the variable aperture 20.

On this basis, as shown in FIG. 7, a thickness (a dimension in the Z direction) of the variable aperture 20 may be reduced by disposing the rotating carrier 22 in the fastening base 21. In addition, the magnet component 241 is disposed on the side that is of the rotating carrier 22 and that is away from the blade 23, and the coil 242 is disposed on the side that is of the magnet component 241 and that faces the fastening base 21. Compared with that in a solution in which a magnet and a coil are disposed on a periphery of a rotating carrier, an area of the variable aperture 20 on an XY surface (that is, in a transverse direction) can be reduced, thereby reducing a size of the variable aperture 20. In this case, the structure of the variable aperture 20 is simplified, and the thickness and the transverse area of the variable aperture 20 are reduced, thereby facilitating a miniaturization design of the entire camera module 10, and improving an integration level of the electronic device.

In addition, when the image sensor 802 (as shown in FIG. 3) in the camera module 10 has a relatively large target surface (that is, a size of the image sensor), a dimension of the lens assembly 40 of the camera module 10 in the Z direction is relatively large, so that the dimension of the lens assembly 40 matches the target surface of the sensor 802. Based on this, when the image sensor 802 with a relatively large target surface is used in the camera module 10, although it is difficult to further reduce the dimension of the lens assembly 40 in the Z direction, when the variable aperture 20 provided in embodiments of this application is used, because a dimension of the variable aperture 20 in the Z direction is relatively small, a size of the entire camera module 10 can be effectively reduced.

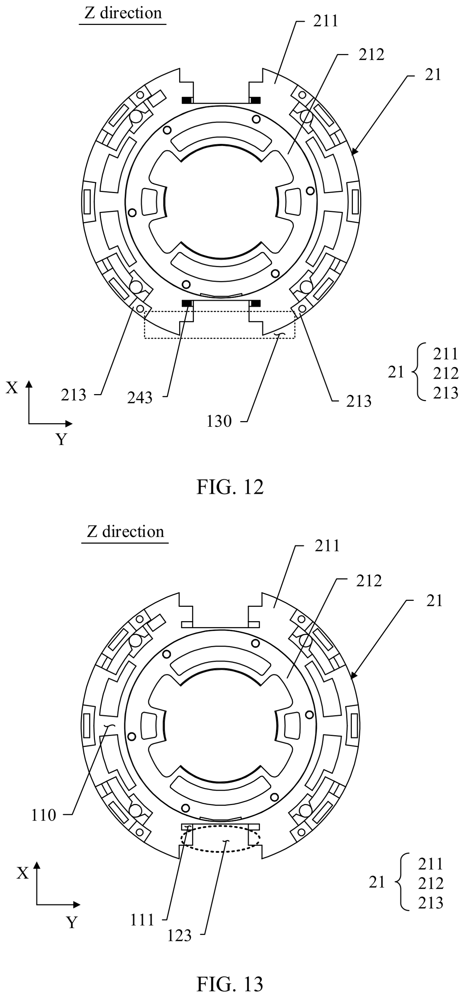

On this basis, the drive component 24 may further include a first magnetic conductive sheet 243 shown in FIG. 12 (a top view obtained in the Z direction in FIG. 6A). The first magnetic conductive sheet 243 may be disposed on a side that is of the bottom plate 211 of the fastening base 21 and that faces the rotating carrier 22 (as shown in FIG. 6A), and the first magnetic conductive sheet 243 is used for attraction with the magnet component 241 on the rotating carrier 22 shown in FIG. 6A. The magnetic conductive sheet may also be referred to as a magnetic attractive sheet, and the magnetic conductive sheet has a high magnetic permeability, a low resistivity, and a small iron loss. Based on this, in a thickness direction of the variable aperture 20 (the Z direction in FIG. 6A), the first magnetic conductive sheet 243 can attract the magnet component 241. Because the first magnetic conductive sheet 243 attracts the magnet component 241 in the Z direction, the first magnetic conductive sheet 243 may also be referred to as a Z-direction magnetic conductive sheet.

For example, the first magnetic conductive sheet 243 may include a ferromagnetic substance capable of attraction, for example, metal such as iron, nickel, or cobalt. For example, the first magnetic conductive sheet 243 may be a stainless steel sheet, which is referred to as a steel sheet for short. A manner of disposing a metal material that can be attracted by a magnetic substance in the following embodiments of this application is the same as that described above. Details are not described herein again.

In addition, further as shown in FIG. 12, a vertical projection of the first opening 130 on the side wall of the boss 212 overlaps a vertical projection of the first magnetic conductive sheet 243 on the side wall of the boss 212. It can be learned from the foregoing that, in the rotation direction of the rotating carrier 22, the opening length (a dimension in the Y direction) of the first opening 130 may be the rotation stroke of the rotating carrier 22. Therefore, when the vertical projection of the first opening 130 on the side wall of the boss 212 overlaps the vertical projection of the first magnetic conductive sheet 243 on the side wall of the boss, the first magnetic conductive sheet 243 may be disposed within a stroke range of the rotating carrier 22.

In this way, in a rotation process of the rotating carrier 22, the magnet component 241 is attracted by the first magnetic conductive sheet 243 in the thickness direction of the variable aperture 20, so that separation between the rotating carrier 22 and the fastening base 21 in a rotation process of the camera module 10 can be reduced, thereby improving reliability of the variable aperture 20.

In addition, when a quantity and positions of first magnetic conductive sheets 243 and a spacing between the first magnetic conductive sheet and the magnet component 241 are adjusted, an attraction force between the first magnetic conductive sheet 243 and the magnet component 241 can be adjusted. For example, as shown in FIG. 12, each drive component 24 may include two first magnetic conductive sheets 243. When the variable aperture 20 has two drive components 24, the variable aperture 20 may have four first magnetic conductive sheets 243 (parts filled with black).

In this case, an attraction force between all first magnetic conductive sheets 243 in the variable aperture 20 and the magnet component 241 can reach about 10 times a weight of the rotating carrier 22 and the magnet component 241. In this case, a friction force between the rotating carrier 22 and the fastening base 21 in FIG. 6A may be increased.

Based on this, further as shown in FIG. 6A, when the rotating carrier 22 rotates to drive the aperture hole 100 formed through movement of the plurality of blades 23 to reach an f-stop, for example, a maximum f-stop (for example, an f-stop 4), because the friction force between the rotating carrier 22 and the fastening base 21 is relatively large, it is difficult for the rotating carrier 22 to further rotate relative to the fastening base 21, and therefore power supply to the coil 242 may be terminated, so that positions of the rotating carrier 22 and the fastening base 21 are relatively fixed (in a steady state), thereby achieving aperture self-locking. In this way, when the user shoots a photo or a video in a fixed scenario, and does not need to change the aperture, because the aperture is self-locked and the coil 242 is in a power-off state (a current in the coil 242 may be 0), power consumption can be reduced.

For example, as shown in FIG. 13 (a top view obtained in the Z direction in FIG. 6A), a part that is of the bottom plate 211 of the fastening base 21 and that is used as a groove bottom of the first mounting groove 110 is provided with a second mounting groove 111. The first magnetic conductive sheet 243 (as shown in FIG. 12) is located in the second mounting groove 111. In this way, the second mounting groove 111 is provided on the bottom plate 211, so that the first magnetic conductive sheet 243 (as shown in FIG. 12) located in the second mounting groove 111 can be embedded in the bottom plate of the fastening base 21. In this way, a thickness of the first magnetic conductive sheet 243 overlaps a partial thickness of the bottom plate 211, thereby helping reduce the thickness of the variable aperture 20. In addition, the second mounting groove 111 is disposed at an end that is of the coil mounting hole 123 used to accommodate the coil 242 and that faces the boss 212, so that the first magnetic conductive sheet 243 located in the second mounting groove 111 is closer to the magnetic attractive component 241 (as shown in FIG. 6A).

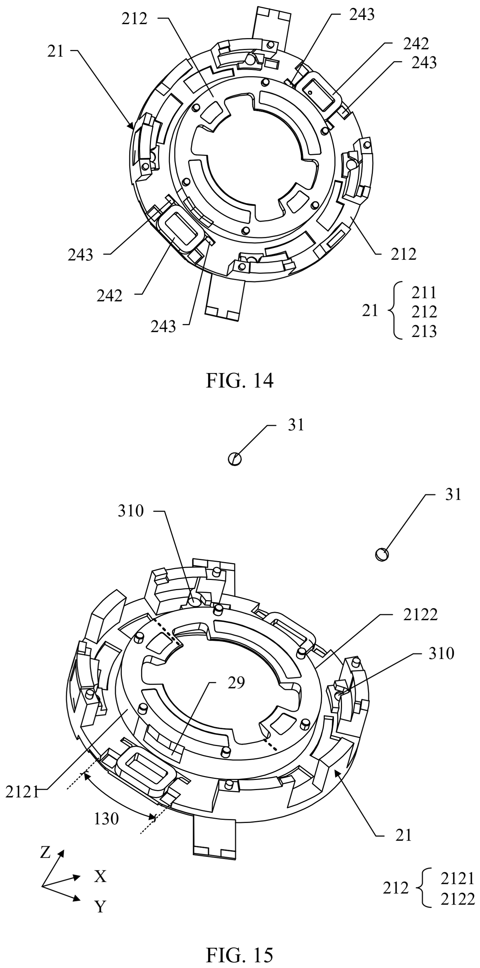

In some embodiments of this application, the drive component 24 may include two first magnetic conductive sheets 243. As shown in FIG. 14, an end that is of the coil 242 and that faces the boss is located between the two first magnetic conductive sheets 243. In this way, an attraction force between all the first magnetic conductive sheets 243 and the magnetic attractive component can be increased by increasing a quantity of first magnetic conductive sheets 243, thereby helping achieve aperture self-locking after the coil 242 is powered off.

It can be learned from the foregoing that, as shown in FIG. 11, the magnet component 241 having the foregoing Halbach array structure may provide a relatively large driving force for the rotating carrier 22. Therefore, the magnet component 241 having the foregoing Halbach array structure may also be referred to as a high-thrust magnet component 241. Therefore, disposing the magnet component 241 having the foregoing Halbach array structure may further resolve a problem that the rotating carrier 22 is stuck due to an excessively large friction force in a rotation process relative to the fastening base 21 because the first magnetic conductive sheet 243 (as shown in FIG. 14) attracts the magnet component 241. This helps increase fault tolerance for a product.

On this basis, as shown in FIG. 15, the side wall of the boss 212 of the fastening base 21 may include a first semi-ring side wall 2121 and a second semi-ring side wall 2122 that are connected, and the first semi-ring side wall 2121 and the second semi-ring side wall 2122 are spliced in a head-to-tail manner to form a complete side wall of the boss 212. A dashed line on the boss 212 in FIG. 15 is used as a boundary between the first semi-ring side wall 2121 and the second semi-ring side wall 2122. The dashed line is merely an example for describing division into the first semi-ring side wall 2121 and the second semi-ring side wall 2122, and does not constitute a limitation on a division manner of the first semi-ring side wall 2121 and the second semi-ring side wall 2122. In addition, the dashed line is not a structure that actually exists on the boss 212. For example, when the boss 212 is circular, arc lengths of the first semi-ring side wall 2121 and the second semi-ring side wall 2122 may be the same.

In addition, further as shown in FIG. 15, the variable aperture 20 further includes a second magnetic conductive sheet 29 and a first rolling part 31. The second magnetic conductive sheet 29 is disposed on the first semi-ring side wall 2121, and the second magnetic conductive sheet 29 is used for attraction with the magnet component 241. Because the second magnetic conductive sheet 29 is attached to a part of the side wall of the boss, for example, the first semi-ring side wall 2121, the second magnetic conductive sheet 29 may also be referred to as a lateral magnetic conductive sheet.

In addition, further as shown in FIG. 15, a vertical projection of the first opening 130 on the first semi-ring side wall 2121 overlaps a vertical projection of the second magnetic conductive sheet 29 on the first semi-ring side wall 2121. It can be learned from the foregoing that the first opening 130 may accommodate the coil 242, and the magnet component 241 is located on a side that is of the coil 242 and that faces the rotating carrier 22. Therefore, the magnet component 241 and the coil 242 are disposed in the Z direction. In this case, a part of the component 241 may also be located in the first opening 130. In this way, when the vertical projection of the first opening 130 on the first semi-ring side wall 2121 overlaps the vertical projection of the second magnetic conductive sheet 29 on the first semi-ring side wall 2121, the second magnetic conductive sheet 29 may be located near the magnet component 241, so that the second magnetic conductive sheet 29 may be more easily attracted by the magnet component 241.

In addition, further as shown in FIG. 15, the first rolling part 31 is disposed between the rotating carrier 22 and the bottom plate 211, the first rolling part 31 is located on a side on which the second semi-ring side wall 2122 is located, the rotating carrier 22 and the fastening base 21 are in contact with the first rolling part 31, and the rotating carrier 22 is rotatably connected to the fastening base 21 through the first rolling part 31. For example, a first rolling groove 310 configured to accommodate the first rolling part 31 may be disposed on the fastening base 21.

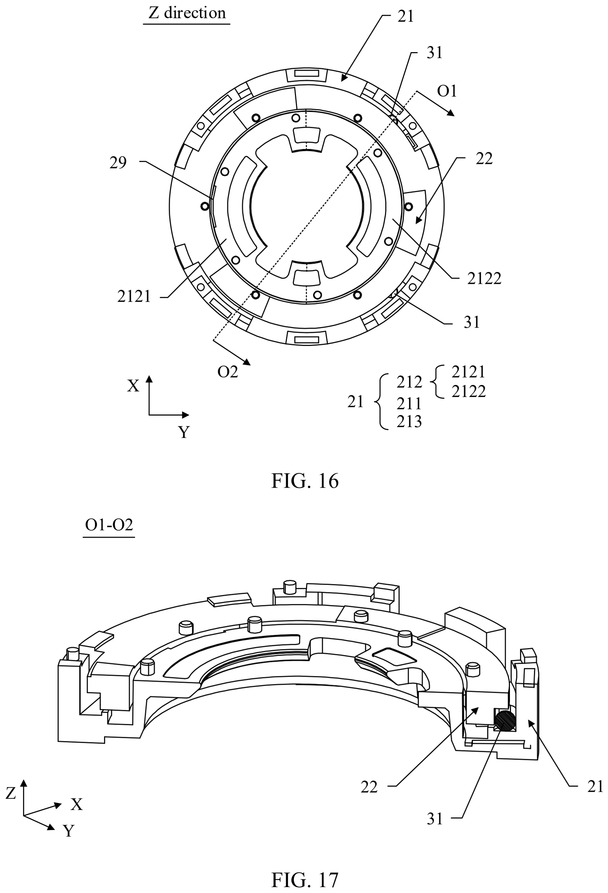

In this way, as shown in FIG. 16 (a top view obtained in the Z direction in FIG. 6A), because the second magnetic conductive sheet 29 is disposed on the first semi-ring side wall 2121, when the second magnetic conductive sheet 29 and the magnet component 241 (as shown in FIG. 6A) attract each other, the rotating carrier 22 moves in the Y direction toward a position of the second semi-ring side wall 2122 of the fastening base 21 (for example, toward the right). Because the first rolling part 31 is located on the side on which the second semi-ring side wall 2122 is located, that is, the second magnetic conductive sheet 29 and the first rolling part 31 may be located on two opposite sides of the boss 212, as shown in FIG. 17 (a sectional view obtained through cutting along the dashed line O1-O2 in FIG. 16), the rotating carrier 22 and the fastening base 21 may be in contact with the first rolling part 31, that is, the first rolling part 31 is in a state of zero fitting (or tight fitting) with both the rotating carrier 22 and the fastening base 21.

In this case, further as shown in FIG. 17, when the rotating carrier 22 is rotatably connected to the fastening base 21 through the first rolling part 31, because the rotating carrier 22 and the fastening base 21 may be in contact with the first rolling part 31, the rotating carrier 22 may always lean on the first rolling part 31 in a rotation process, and rotate relative to the fastening base 21, thereby improving stability of the rotating carrier 22 in the rotation process and consistency of the rotating carrier 22 rotating to various angles, and improving product reliability.

For example, the first rolling part 31 may include one ball or one roller. Alternatively, the first rolling part 31 may include a plurality of balls or a plurality of balls. For example, the first rolling part 31 includes a plurality of balls. The plurality of balls may be arranged in the thickness direction (that is, the Z direction) of the variable aperture 20.

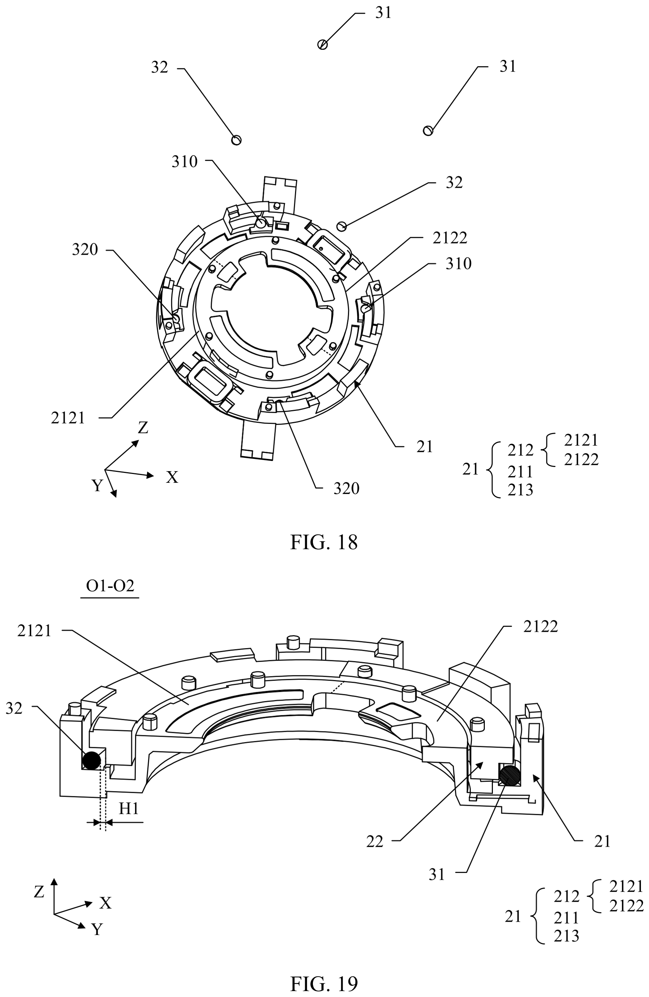

In addition, in some other embodiments of this application, the variable aperture 20 further includes a second rolling part 32 shown in FIG. 18. The second rolling part 32 may be disposed between the rotating carrier 22 (as shown in FIG. 6A) and the bottom plate 211 of the fastening base 21, and the second rolling part 32 is located on a side on which the first semi-ring side wall 2121 is located. For example, a first rolling groove 320 configured to accommodate the second rolling part 32 may be disposed on the fastening base 21. There is an adjustment gap H1 shown in FIG. 19 (a sectional view obtained through cutting along the dashed line O1-O2 in FIG. 16) between the second rolling part 32 and the rotating carrier 22, and 30 µm≤H1≤70 µm.

It can be learned from the foregoing that, further as shown in FIG. 19, the second rolling part 32 and the second magnetic conductive sheet 29 are located on a same side of the boss 212. When the second magnetic conductive sheet 29 and the magnet component 241 (as shown in FIG. 6A) attract each other, the rotating carrier 22 moves toward the position of the second semi-ring side wall 2122 of the fastening base. In this case, there may be the adjustment gap H1 between the second rolling part 32 located on the side on which the first semi-ring side wall 2121 is located and the rotating carrier 22.

In this way, in a process of performing a reliability test (such as a rolling test or a drop test) on the variable aperture 20 and a use process of the user, when the rotating carrier 22 has relatively large displacement in a horizontal plane (perpendicular to the optical axis of the variable aperture 20), a side that is of the rotating carrier 22 and that is close to the second rolling part 32 may be in contact with the second rolling part 32, so that the second rolling part 32 limits further displacement of the rotating carrier 22, thereby reducing a displacement amount of the rotating carrier 22. This avoids a phenomenon that the plurality of blades 23 slidably connected to the rotating carrier 22 are damaged because the blades 23 are pulled when the rotating carrier 22 has relatively large displacement.

For example, the second rolling part 32 may include one ball or one roller. Alternatively, the second rolling part 32 may include a plurality of balls or a plurality of balls. For example, the second rolling part 32 includes a plurality of balls. The plurality of balls may be arranged in the thickness direction (that is, the Z direction) of the variable aperture 20.

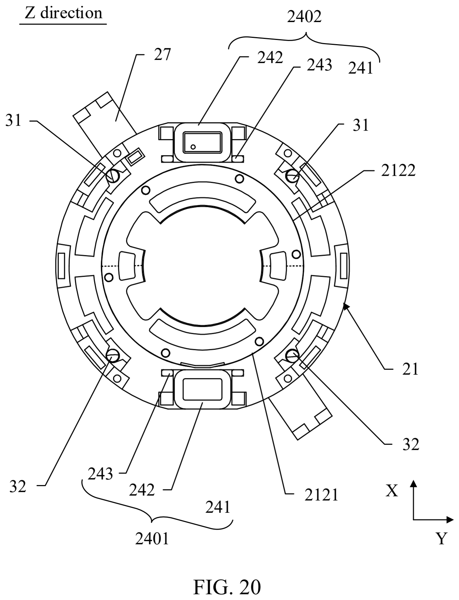

On this basis, as shown in FIG. 20 (a top view obtained in the Z direction in FIG. 6A), the variable aperture 20 may include two drive components, two first rolling parts 31, and two second rolling parts 32. The two drive components are respectively a first drive component 2401 and a second drive component 2402, the first drive component 2401 is disposed on the side on which the first semi-ring side wall 2121 is located, and the second drive component 2402 is disposed on the side on which the second semi-ring side wall 2122 is located. The first drive component 2401 is located between the two second rolling parts 32. The second drive component 2402 is located between the two first rolling parts 31. In this way, the first drive component 2401 is disposed on the side on which the first semi-ring side wall 2121 of the boss 212 is located, and the second drive component 2402 is disposed on the side on which the second semi-ring side wall 2122 is located, so that the rotating carrier 22 can be evenly subject to a force in a rotation process.

In addition, the first drive component 2401 is disposed between the two second rolling parts 32, and a quantity of the second rolling parts 32 is increased, so that displacement of the rotating carrier 22 can be further limited in a process of performing a reliability test (such as a rolling test or a drop test) on the variable aperture 20 and a use process of the user, thereby effectively reducing a displacement amount of the rotating carrier 22. In addition, the second drive component 2402 is disposed between the two first rolling parts 31, and a quantity of first rolling parts 31 is increased, so that the rotating carrier 22 can be in contact with the first rolling parts 31 on both sides of the first drive component 2401, thereby helping further improve consistency, stability, and reliability of movement.

An example in which the variable aperture 20 has two drive components, that is, the first drive component 2401 and the second drive component 2402 (which may also be referred to as drive components 24 disposed on two sides) is used for description above. In some other embodiments of this application, one drive component 24 (which may also be referred to as a drive component 24 disposed on one side) may be alternatively disposed.

It can be learned from the foregoing that, in FIG. 6A, the magnet component 241 is connected to the rotating carrier 22 used as a stator. Based on this, in some embodiments of this application, the coil 242 may be indirectly or directly connected to the fastening base 21 used as a stator. The following describes a manner of connecting the coil 242 and the fastening base 21 by using an example.

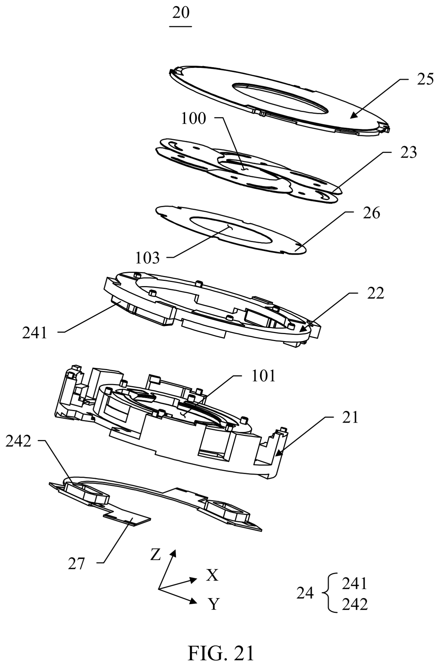

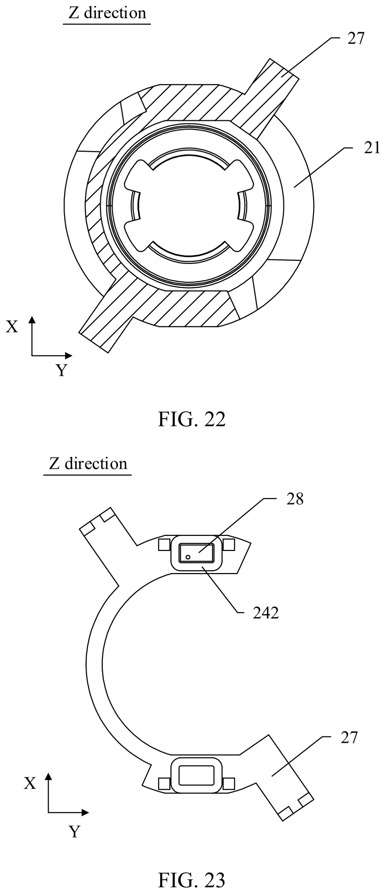

For example, as shown in FIG. 21, the variable aperture 20 may further include a flexible printed circuit (flexible printed circuit, FPC) 27, the FPC 27 is disposed on a side that is of the fastening base 21 and that is away from the blade 23, and the FPC 27 is connected to the fastening base 21. The coil 242 passes through the fastening base 21 and is disposed on a side that is of the FPC 27 and that faces the rotating carrier 22, and the coil 242 is connected to the FPC 27. For example, in an assembly process of the variable aperture 20, the coil 242 may be first assembled with the entire FPC 27, and then the FPC 27 on which the coil 242 is assembled is bonded to a lower surface (that is, a surface away from the cover plate 25) of the fastening base 21 by using a gel dispensing process. Based on this, the coil 242 may be indirectly connected to the fastening base 21 through the FPC 27. In this way, in comparison with that in a solution in which an FPC is bent into an arc around a periphery of a mover, the FPC 27 in this application does not need to be bent. As shown in FIG. 22 (a bottom view obtained in the Z direction in FIG. 21), the FPC 27 may be disposed as a flat plate structure parallel to the XY plane, so that a manufacturing process of the FPC 27 can be simplified.

In addition, it can be learned from the foregoing that, in a process in which the rotating carrier 22 rotates relative to the fastening base 21, the plurality of blades 23 may be driven to move, to adjust the hole diameter of the aperture hole 100 enclosed by the plurality of blades 23. Based on this, to control a rotation position of the rotating carrier 22 and implement precise control on the hole diameter of the aperture hole 100, the variable aperture 20 may further include a rotation control chip (integrated circuit, IC) 28 shown in FIG. 23 (a top view obtained in the Z direction in FIG. 21), and the rotation control chip 28 is configured to control the rotation position of the rotating carrier 22.

In some embodiments of this application, further as shown in FIG. 23, the rotation control chip 28 may be electrically connected to the FPC 27, so that the rotation control chip 28 is electrically connected to the circuit board 80 (as shown in FIG. 3) of the camera module 10 through the FPC 27. In this way, a processor on the circuit board 80 may transmit a control signal to the rotation control chip 28, so that the rotation control chip 28 can control the rotation position of the rotating shaft carrier. For example, the rotation control chip 28 may be a Hall (Hall) chip. It can be learned from the foregoing that the coil 242 shown in FIG. 23 is connected to the FPC 27. Therefore, in some embodiments, both the coil 242 and the rotation control chip 28 may be disposed on the FPC 27. For example, the rotation control chip 28 is mounted (fastened) inside the coil 242, so that component layout space on the FPC 27 can be saved.

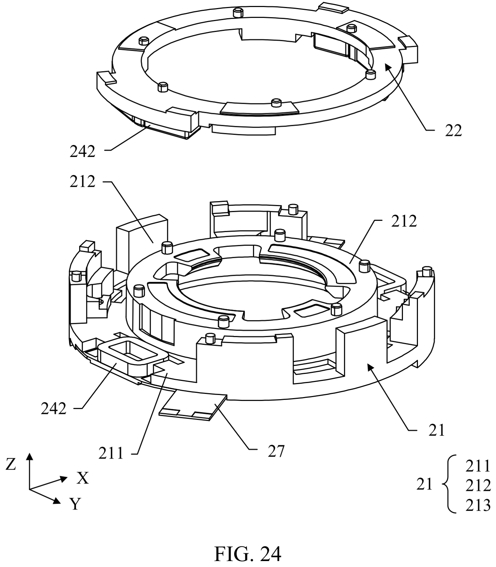

On this basis, as shown in FIG. 24, when the FPC 27 on which the coil 242 is disposed is connected to the lower surface of the fastening base 21, to reduce the thickness of the variable aperture 20, a coil mounting hole 123 (as shown in FIG. 6A) that penetrates the bottom plate 211 may be provided on the bottom plate 211 of the fastening base 21, and the coil 242 may be disposed in the coil mounting hole 123, so that the coil 242 can be disposed through the fastening base 21. In this way, a thickness of the coil 242 overlaps a part of a thickness of the fastening base 21, thereby reducing the thickness of the variable aperture 20.

In addition, further as shown in FIG. 24, the coil 242 that needs power supply is disposed on the side that is of the FPC 27 and that faces the rotating carrier 22, and the coil 242 is connected to the FPC 27, so that the coil 242 is disposed opposite to the magnet component 241, and power is directly supplied to the coil 242 by using a metal trace on the FPC 27, thereby simplifying the electrical connection structure of the variable aperture 20.

Based on this, it can be learned from the foregoing that a lower surface (parallel to the XY plane) of the coil 242 is connected to the FPC 27, and an upper surface (parallel to the XY plane) of the magnet component 241 is connected to the rotating carrier 22. Therefore, the coil 242 and the magnet component 241 are disposed in a transverse direction (parallel to the XY plane) on a side that is of the rotating carrier 22 and that is away from the blade 23. Therefore, compared with that in a solution in which a coil and a magnet are disposed on a periphery of the rotating carrier 22, a size of the variable aperture 20 in the XY plane can be reduced.

In addition, the bottom plate 211 of the fastening base 21 is provided with the coil mounting hole 123 (as shown in FIG. 6A) for accommodating the coil 242, and the side plate 213 of the fastening base 21 is provided with the first opening 130 (as shown in FIG. 6A) for accommodating the magnet component 241. Therefore, in the Z direction shown in FIG. 24, the thickness of the coil 242 overlaps the thickness of the fastening base 21, and the thickness of the magnet component 241 overlaps the thickness of the fastening base 21, so that the thickness of the variable aperture 20 in the Z direction can be reduced.

In conclusion, the variable aperture 20 provided in embodiments of this application is a moving-magnet architecture in which the FPC 27 is attached to the bottom of the fastening base 21 and the coil 242 and the magnet component 241 are transversely arranged, and has performance of a small quantity of components, a simple structure and process, a small size, a light weight, good reliability, and low costs.

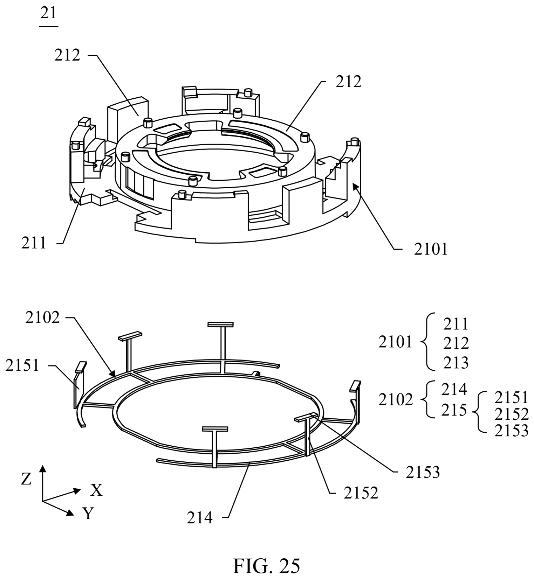

On this basis, to improve reliability of the variable aperture 20, in some embodiments of this application, the fastening base 21 may include a first plastic part 2101 and a first metal support 2102 that are shown in FIG. 25. A material of the first plastic part 2101 includes a plastic material, for example, polyester or polyethylene. The first plastic part 2101 may include the bottom plate 211, the boss 212, and the side plate 213. In addition, a material of the first metal support 2102 may include at least one metal element. For example, the first metal support 2102 may be a stainless steel support. The first metal support 2102 may include a first metal portion 214 and a second metal portion 215.

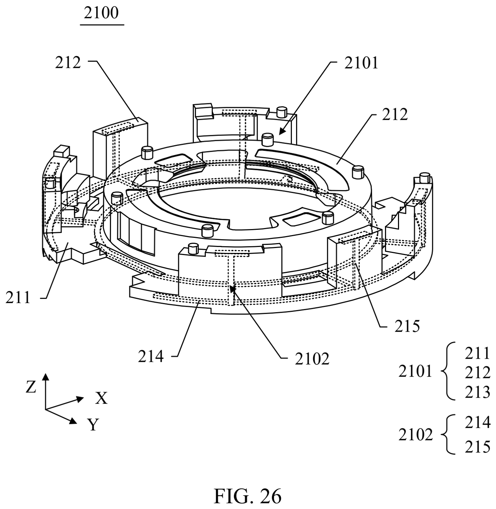

Based on this, as shown in FIG. 26, the first metal support 2102 may be embedded in the first plastic part 2101, and the first metal support 2102 and the first plastic part 2101 are connected to form a first integrated mechanical part 2100. In this way, the first integrated mechanical part 2100 may be formed by using an insert molding (insert molding) process. The first metal portion 214 may be located in the bottom plate 211, to strengthen rigidity of a part that is of the fastening base 21 and that is located on the bottom plate 211. The second metal portion 215 is disposed in the side plate 213, to strengthen rigidity of a part that is of the fastening base 21 and that is located on the side plate 213.

Because the fastening base 21 has the first metal support 2102, a mechanical strength of the fastening base 21 can be increased, and in a process of performing a reliability test (such as a rolling test or a drop test) on the variable aperture 20 and a use process of a user, when a collision occurs on the fastening base 21, a probability that the fastening base 21 is damaged can be reduced, thereby prolonging a service life of a product. It can be learned from the foregoing that the material of the first metal support 2102 may include stainless steel. In the following embodiments, a material of a metal part that is located in a plastic part and that is formed by using an insert molding process may also include the foregoing stainless steel.

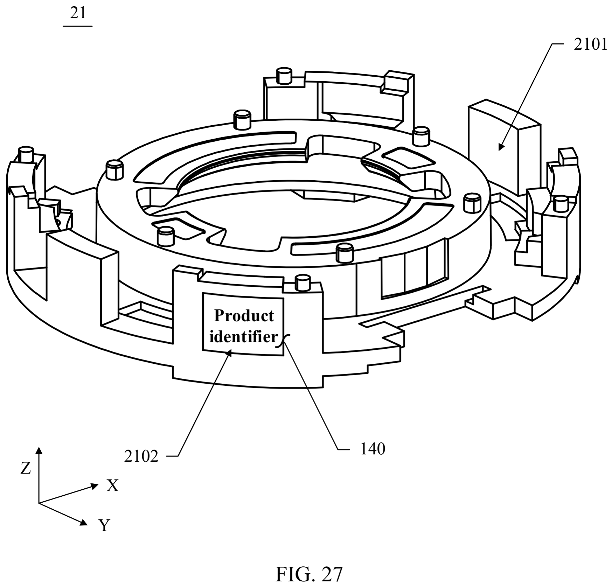

On this basis, as shown in FIG. 27, the first plastic part 2101 may have a first hollow zone 140, and a part of a surface of the first metal support 2102 may be exposed from the first hollow zone 140. For example, as shown in FIG. 25, the second metal portion 215 of the first metal support 2102 may include a metal plate 2151. At least a part of the metal plate 2151 may be exposed from the first hollow zone 140 in FIG. 27. An exposed surface of the metal plate 2151 is used to create a product identifier. In this way, the product identifier representing product-related information may be directly prepared on the first metal support 2102, and a steel sheet used to create and attach the product identifier does not need to be separately disposed, thereby reducing a quantity of components and simplifying a manufacturing process. For example, the product identifier may be a two-dimensional code, a digit, a letter, a character code, or the like. This is not limited in this application.

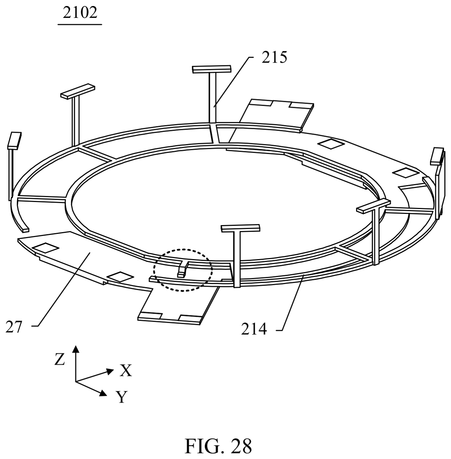

In addition, as shown in FIG. 28, the first metal support 2102 may be further grounded on the FPC 27. For example, a part (a part circled by a dashed line in FIG. 28) of the first metal portion 214 of the first metal support 2102 may be electrically connected to a copper exposure region (not shown in the figure) on the FPC 27 by using a conductive adhesive, to implement grounding of the first metal support 2102, thereby reducing electromagnetic interference. A material of the conductive adhesive is not limited in this application, provided that it can be ensured that the conductive adhesive can ground the first metal support 2102 on the FPC 27.

The foregoing describes a disposing manner of the coil 242 by using an example in which the coil 242 in the drive component 24 is disposed on the FPC 27, and the FPC 27 is connected to the bottom of the fastening base 21, so that the coil 242 is indirectly connected to the fastening base 21 through the FPC 27.

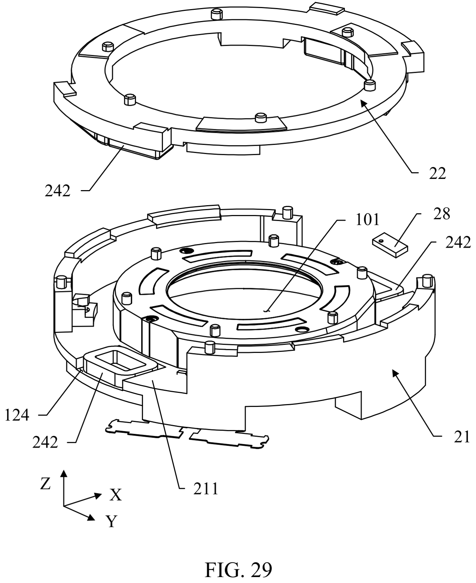

Alternatively, in some other embodiments of this application, as shown in FIG. 29, the coil 242 is directly disposed on the fastening base 21, and the coil 242 is connected to the fastening base 21. For example, a coil mounting groove 124 may be provided on the bottom plate 211 of the fastening base 21, the coil 242 may be located in the coil mounting groove 124, and a bottom of the coil mounting groove 124 may carry the coil 242. Similarly, the fastening base 21 used as a stator is in a static state relative to the rotating carrier 22 in a process of changing the hole diameter of the aperture hole 100 of the variable aperture 20. In this way, the coil 242 disposed on the fastening base 21 may be in a static state relative to the magnet component 241 disposed on the rotating carrier 22, so that the variable aperture 20 is still the foregoing moving-magnet variable aperture 20.

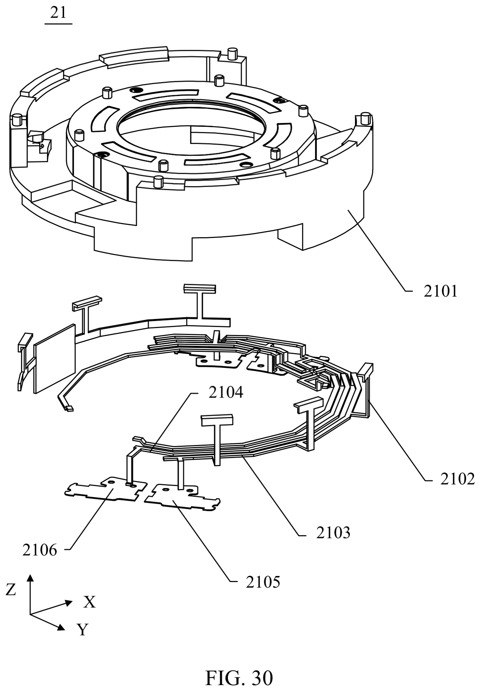

Similarly, the fastening base 21 shown in FIG. 29 may also be prepared by using the foregoing insert molding process. In this case, as shown in FIG. 30, the fastening base 21 may include a first plastic part 2101 and a first metal support 2102. Structures and technical effects of the first plastic part 2101 and the first metal support 2102 are the same as those described above, and details are not described herein again.

On this basis, further as shown in FIG. 29, the rotation control chip 28 may be disposed in the coil 242. Based on this, in some embodiments of this application, an FPC electrically connected to the rotation control chip 28 may not be disposed in the variable aperture 20. To electrically connect the circuit board 80 shown in FIG. 3 and the rotation control chip 28, as shown in FIG. 30, the fastening base 21 may further include a metal ground trace 2103, a metal signal trace 2104, a metal ground terminal 2105, and a metal signal terminal 2106. Materials of the metal ground trace 2103, the metal signal trace 2104, the metal ground terminal 2105, and the metal signal terminal 2106 may be the same as or different from the material of the first metal support 2102. This is not limited in this application.

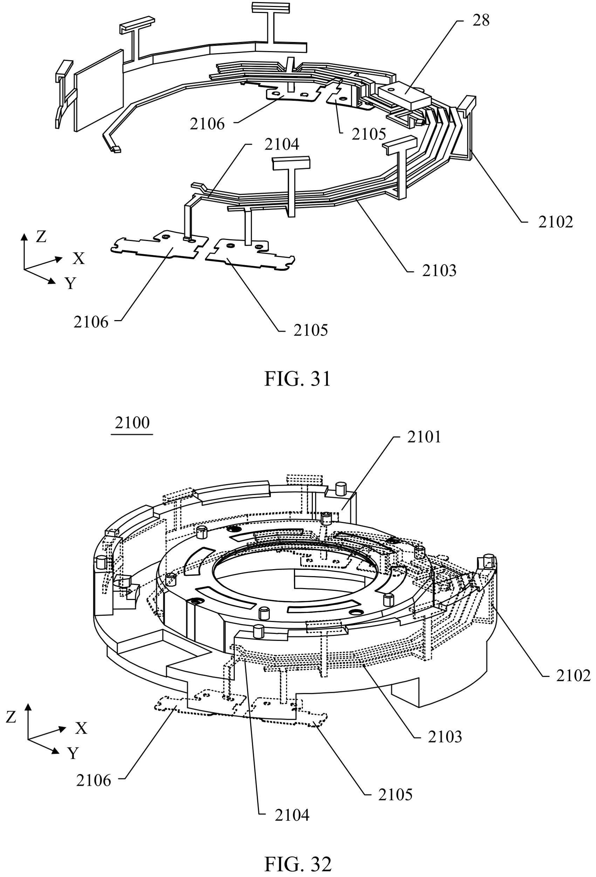

As shown in FIG. 31, the metal signal trace 2104 may be electrically connected to the rotation control chip 28 and the metal signal terminal 2106, and the metal ground trace 2103 may be electrically connected to the rotation control chip 28 and the metal ground terminal 2105. The metal signal terminal 2106 and the metal ground terminal 2105 may be electrically connected to the circuit board 80 shown in FIG. 3.

In this way, the metal ground trace 2103, the metal signal trace 2104, the metal ground terminal 2105, and the metal signal terminal 2106 may replace the FPC 27, so that a control signal sent by a processor on the circuit board 80 may be transmitted to the rotation control chip 28 through the metal ground trace 2103, the metal signal trace 2104, the metal ground terminal 2105, and the metal signal terminal 2106. Quantities of metal ground terminals 2105 and metal signal terminals 2106 are not limited in this application. In FIG. 31, two metal ground terminals 2105 and two metal signal terminals 2106 are used as an example for description.

In addition, the metal ground terminal 2105 may be grounded on the circuit board 80 shown in FIG. 3. Therefore, further as shown in FIG. 31, the metal ground trace 2103 may be further electrically connected to the first metal support 2102, so that the first metal support 2102 may be grounded on the circuit board 80 through the metal ground trace 2103 and the metal ground terminal 2105.

In this case, as shown in FIG. 32, the first metal support 2102, the metal ground trace 2103, and the metal signal trace 2104 are embedded in the first plastic part 2101, and the metal signal trace 2104, the metal ground trace 2103, the first metal support 2102, and the first plastic part 2101 are connected to form a first integrated mechanical part 2100. Same as described above, the first integrated mechanical part 2100 may be formed by using an insert molding process. A technical effect of the first integrated mechanical part 2100 is the same as that described above, and details are not described herein again. At least a part of the metal ground terminal 2105 and the metal signal terminal 2106 is exposed outside the first plastic part 2101.

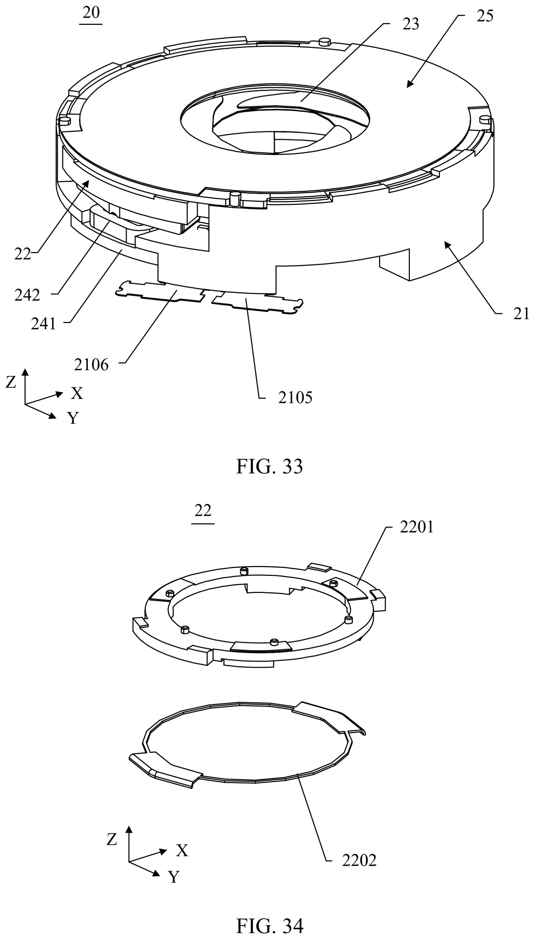

In this way, as shown in FIG. 33, components such as the rotating carrier 22, the magnet component 241, the coil 242, and the blade 23 are disposed in the accommodating space between the cover plate 25 and the fastening base 21 to form the variable aperture 20. The variable aperture 20 may be electrically connected to the circuit board 30 shown in FIG. 3 through the metal ground terminal 2105 and the metal signal terminal 2106 exposed outside the accommodating space, so that no FPC needs to be disposed inside the variable aperture 20, thereby simplifying a structure. In addition, the coil 242 directly connected to the fastening base 21 may be further electrically connected to the metal signal trace 2104 in the fastening base 21, to supply power to the coil 242. In this case, the coil 242 may be electrically connected to the entire fastening base 21 through the metal signal trace 2104, so that no circuit board configured to supply power to the coil 242 needs to be additionally disposed.

In conclusion, the foregoing describes a disposing manner of the coil 242 in the variable aperture 20 by using an example. In the variable aperture 20 shown in FIG. 4, the coil 242 is disposed on the FPC 27, and the FPC 27 is connected to the fastening base 21. In the variable aperture 20 shown in FIG. 33, no FPC needs to be disposed, and the coil 242 is directly connected to the fastening base 21. For any one of the foregoing variable apertures 20, the rotating carrier 22 may be rotatably connected to the fastening base 21. For ease of description, the variable aperture 20 having the FPC 27 shown in FIG. 4 is used as an example below for description.

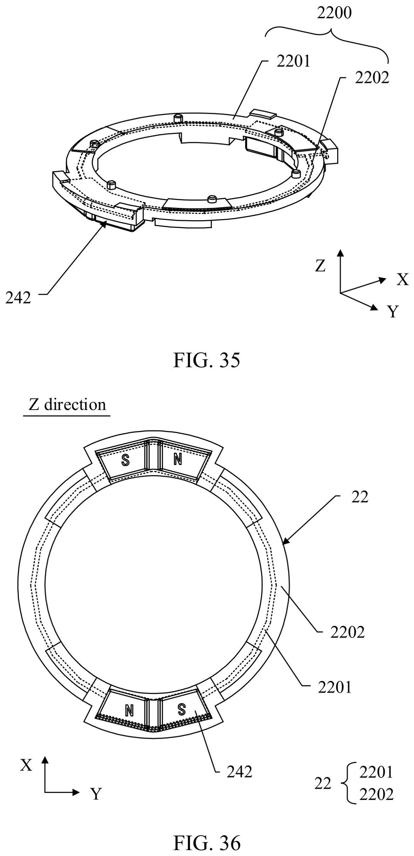

In some embodiments of this application, as shown in FIG. 34, the rotating carrier 22 may include a second plastic part 2201 and a second metal support 2202. Materials of the second plastic part 2201 and the second metal support 2202 may be obtained similarly, and details are not described herein again. As shown in FIG. 35, the second metal support 2202 is embedded in the second plastic part 2201, and the second metal support 2202 and the second plastic part 2201 are connected to form a second integrated mechanical part 2200.

Similarly, the second integrated mechanical part 2200 may be formed by using the foregoing insert molding process. Because the rotating carrier 22 has the second metal support 2202, a mechanical strength of the rotating carrier 22 can be increased, and in a process of performing a reliability test (such as a rolling test or a drop test) on the variable aperture 20 and a use process of the user, when a collision occurs on the rotating carrier 22, a probability that the rotating carrier 22 is damaged can be reduced, thereby prolonging a service life of a product.

In addition, further as shown in FIG. 35, the magnet component 241 and the second metal support 2202 are connected to each other and attract each other. In this way, for example, as shown in FIG. 36 (a bottom view obtained in the Z direction in FIG. 35), a part of the second metal support 2202 may be used as a bearing portion of the magnet component 241, and gel is dispensed on a side surface that is of the bearing portion and that faces the magnet component 241, so that the magnet component 241 is connected to the second metal support 2202.

On this basis, further as shown in FIG. 36, because the second metal support 2202 can be attracted by the magnet component 241, and there is a relatively large attraction force between the second metal support 2202 and the magnet component 241, the magnet component 241 can be prevented to a maximum extent from falling off. Therefore, reliability of a connection between the component and the second metal support 2202 is improved in this case. In addition, separate disposing of a steel sheet for connecting the rotating carrier 22 and the magnet component 241 may be avoided, thereby simplifying a manufacturing process.

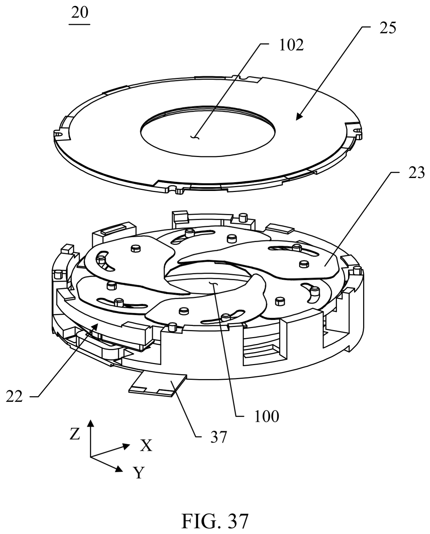

In some embodiments of this application, the variable aperture 20 further includes a cover plate 25 shown in FIG. 37. The cover plate 25 is disposed on a side that is of the plurality of blades 23 and that is away from the rotating carrier 22, and the cover plate 25 covers the fastening base 21. A second light transmitting hole 102 is provided on the cover plate 25. When the cover plate 25 covers the fastening base 21, the second light transmitting hole 102 may be in communication with the aperture hole 100.

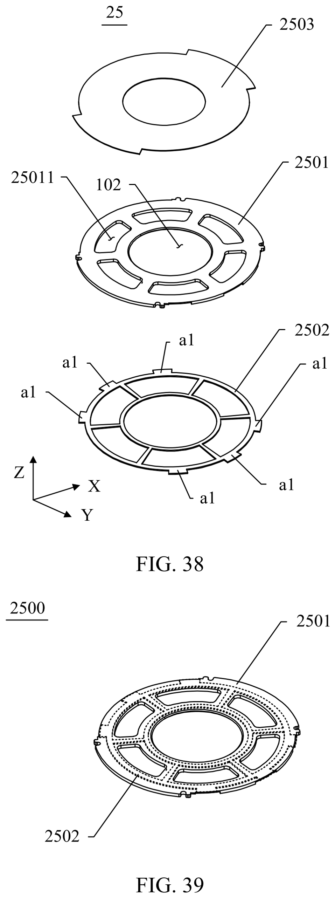

In addition, in some embodiments of this application, as shown in FIG. 38, the cover plate 25 may include a third plastic part 2501, a third metal support 2502, and a first soma 2503 (soma). Materials of the third plastic part 2501 and the third metal support 2502 may be obtained similarly, and details are not described herein again. As shown in FIG. 39, the third metal support 2502 is embedded in the third plastic part 2501, and the third metal support 2502 and the third plastic part 2501 are connected to form a third integrated mechanical part 2500.

Similarly, the third integrated mechanical part 2500 may be formed by using the foregoing insert molding process. Because the cover plate 25 has the third metal support 2502, a mechanical strength of the cover plate 25 can be increased, and in a process of performing a reliability test (such as a rolling test or a drop test) on the variable aperture 20 and a use process of a user, when a collision occurs on the cover plate 25, a probability that the cover plate 25 is damaged can be reduced, thereby prolonging a service life of a product.

In some embodiments of this application, further as shown in FIG. 38, the third metal support 2502 has a plurality of hollow portions 25011 that penetrate the third metal support 2502, and the hollow portions 25011 are disposed on a periphery of the second light transmitting hole 102. In this way, the second light transmitting hole 102 is in communication with the aperture hole 100, and the second light transmitting hole 102 may be used to enable external light to enter the aperture hole 100 through the second light transmitting hole. In addition, the plurality of hollow portions 25011 are disposed on the third metal support 2502, so that compared with that of a cover plate 25 that is made of metal as a whole, a weight of the entire third metal support 2502 can be reduced, thereby reducing a weight of the cover plate 25 and a weight of the entire variable aperture 20.

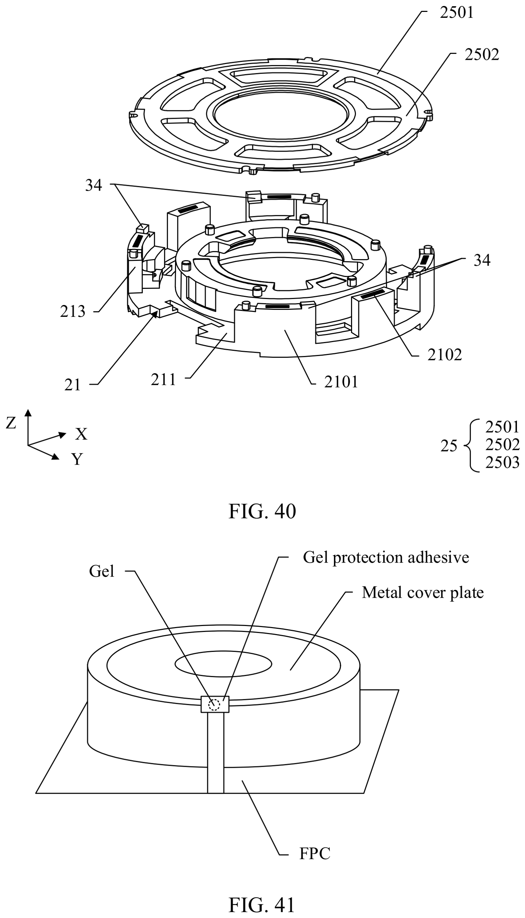

In addition, as shown in FIG. 40, the third metal support 2502 is connected to the first metal support 2102. For example, the third metal support 2502 in the cover plate 25 may be connected to the first metal support 2102 in the fastening base 21 through welding, so that reliability of a connection between the cover plate 25 and the fastening base 21 can be improved, and a probability that the cover plate 25 falls off can be reduced.

In some embodiments of this application, a plurality of welding positions a1 (as shown in FIG. 38, six welding positions a1 are used as an example) may be provided on the cover plate 25, and the plurality of welding positions a1 may be provided around the aperture hole 100. In addition, as shown in FIG. 25, the second metal portion 215 of the first metal support 2102 may further include a plurality of metal rods 2152 and a plurality of welding portions 2153, and one metal rod 2152 is connected to one welding portion 2153. When the cover plate 25 has six welding positions a1 (as shown in FIG. 40), the first metal support 2102 may have six metal rods 2152 and six welding portions 2153. In this case, one welding portion 2153 of the first metal support 2102 may be welded at one welding position a1 of the cover plate 25, thereby improving connection stability between the cover plate 25 and the fastening base 21. In addition, a riveting process and a gel dispensing process may be avoided, and a process flow of the motor 41 is reduced while reliability strength is enhanced, thereby reducing overall costs.

On this basis, further as shown in FIG. 40, after the third metal support 2502 is welded to the first metal support 2102, the third metal support 2502 may be electrically connected to the first metal support 2102, so that the third metal support 2502 may be grounded on the FPC 27 (as shown in FIG. 37) through the first metal support 2102.

In this way, a manufacturing process for grounding of the cover plate 25 may be simplified. In a related technology, as shown in FIG. 41, a metal cover plate mainly including a steel plate needs to be electrically connected to a lead-out part of an FPC in a gel dispensing manner for grounding, and then a gel dispensing position is covered with a gel protection adhesive. Compared with the related technology, in this application, only the third metal support 2502 in the cover plate 25 shown in FIG. 40 needs to be electrically connected to the first metal support 2102 in the fastening base 21, for example, through welding or gel dispensing, so that the lead-out part of the FPC and two processes of a gel dispensing layer and the gel protection adhesive for electrically connecting the lead-out part of the FPC and the metal cover plate do not need to be additionally disposed, thereby simplifying a structure, reducing a manufacturing process, and reducing costs of the variable aperture 20.

Alternatively, in some other embodiments of this application, the third metal support 2502 in the cover plate 25 shown in FIG. 40 and the first metal support 2102 in the fastening base 21 may be grounded through gel dispensing (for example, silver gel dispensing) or the like.

In addition, further as shown in FIG. 38, the first soma 2503 is stacked on a side that is of the third integrated mechanical part 2500 (including the third plastic part 2501 and the third metal support 2502) and that is away from the blade 23 (as shown in FIG. 37), and the first soma 2503 is located on a top surface of the variable aperture 20. The first soma 2503 may block a part of a structure of the blade 23 below the cover plate 25, so that a side surface that is of the first soma 2503 and that is away from the third integrated structure is used as a user-visible appearance surface, thereby achieving an effect of decoration and improving appearance quality and appearance fineness, increasing a control area of a product appearance to a maximum extent, and meeting an industrial design (industrial design, ID) requirement.

In addition, the third metal support 2502 in the cover plate 25 is located in the third plastic part 2501, and the cover plate 25 is disposed on a side that is of the plurality of blades 23 and that is away from the rotating carrier 22. In this way, in a rotation process of the blade 23, a component that is directly in contact with the blade 23 and rubs the blade 23 is the third plastic part 2501 in the cover plate 25. Compared with a surface of a metal material, a surface of the third plastic part 2501 may have a relatively small friction coefficient, so that a friction force between the blade 23 and the third plastic part 2501 can be reduced, thereby further reducing a probability of wear (for example, a whitening phenomenon) of the blade 23 in a reliability test or use process.

In some embodiments of this application, the second soma 26 in FIG. 21, the first soma 2503 in FIG. 38, and the blade 23 in FIG. 37 may use a same material. A specular reflectance G (Gloss) and an optical density value OD of the material, and an L value, an a value, and a b value in a color triplet of the material may be respectively as follows: R≤0.3%; OD≥5.0; L≤8; |a|≤1; and |b|≤1.

The specular reflectance G may be tested by using a multi-angle gloss meter (for example, tested by using a common visual angle of 60°). A lower specular reflectance G indicates being more matte. A smaller L value indicates a higher blackness. The a value and the b value indicate chroma indexes, and represent color cast degrees. A larger a value and a larger b value indicate a deeper hue. In addition, a larger optical density value OD indicates a lower transmittance and a higher absorption rate. When the optical density value OD is greater than 5, the transmittance is far less than 1%.

In this way, when the specular reflectance G and the optical density value OD of the material of the second soma 26, the first soma 2503, and the blade 23, and the L value, the a value, and the b value in the color triplet of the material may be respectively as follows: R≤0.3%; OD≥5.0; L≤8; |a|≤1; and |b|≤1, the material of all of the second soma 26, the first soma 2503, and the blade 23 may be a super-black material, so that in a moving process of the blade 23, the user can see that colors and glosses of parts of the first soma 2503, the second soma 26, and the blade 23 are consistent, thereby reducing a probability of a color difference between the three components and improving appearance quality.

In addition, when the material used for all of the second soma 26, the first soma 2503, and the blade 23 is the super-black material, the super-black material has a relatively good blackness, meets an appearance design requirement, and has relatively good wear resistance performance. Alternatively, the second soma 26, the first soma 2503, and the blade 23 may use a base material, and a surface of the base material is coated with or attached with the super-black material, so that an appearance consistency requirement can also be met.

In addition, mechanical performance of the same material used for the second soma 26, the first soma 2503, and the blade 23 may meet the following requirement: modulus≥3000 MPa, yield strength/break strength≥80 MPa (if there is no significant yield phenomenon, only the break strength needs to be focused on), and elongation at break≥10%. In this way, in a reliability test process, two or five rounds of drop tests can be passed, and 500 roller tests can be passed. When the roller test is performed on the variable aperture 20 more than 1000 times, there is a specific risk. In addition, a service life of the variable aperture 20 may reach 250,000 times.

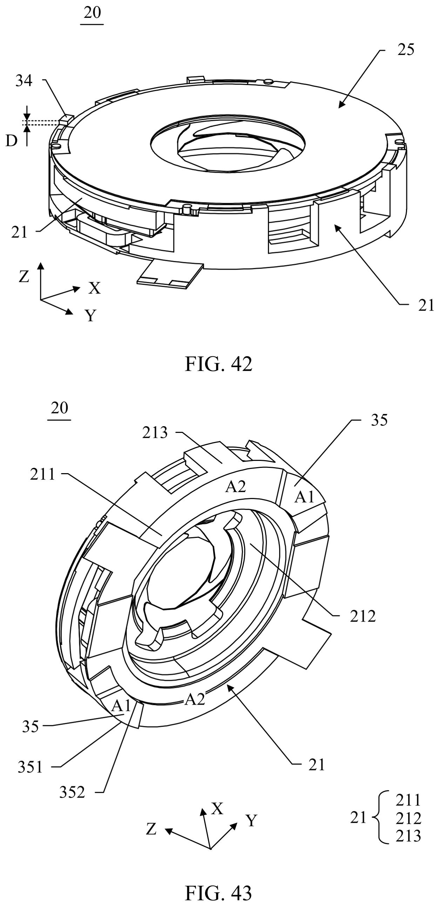

In some embodiments of this application, as shown in FIG. 42, the fastening base 21 may further include an anti-collision structure 34. The anti-collision structure 34 may be disposed around a periphery of the rotating carrier 22, and protrude from a surface that is of the cover plate 25 and that is away from the blade 23. For example, a height D of the anti-collision structure 34 may be about 0.08 mm. For example, the anti-collision structure is shown in FIG. 40. The anti-collision structure 34 may be disposed on a side that is of the side plate 213 of the fastening base 21 and that is away from the bottom plate 211, and the fastening base 21 may have four anti-collision structures 34. A quantity of anti-collision structures 34 is not limited in this application.

In this way, a part of the fastening base 21 that is around the periphery of the rotating carrier 22 and that protrudes from the cover plate 25, for example, the anti-collision structure 34, may be in contact with a lens or another decorative component that is on the rear housing 03 (as shown in FIG. 1) of the electronic device 01 and that covers the camera module 10, so that in a product test (for example, a rolling reliability test) process or a use process of the user, an appearance defect caused by wear of a top surface of the cover plate 25 when direct contact friction occurs between the cover plate 25 and the lens or the another apparatus component can be reduced, thereby improving an appearance, a service life, and reliability of the product.

In addition, it can be learned from the foregoing that the variable aperture 20 may be connected to the lens assembly 40 in FIG. 3. Based on this, to improve reliability of a connection between the variable aperture 20 and the lens assembly 40, in some embodiments of this application, as shown in FIG. 43, the fastening base 21 further includes a bonding structure 35. The bonding structure 35 may be disposed on a surface that is of the bottom plate 211 of the fastening base 21 and that is away from the side plate 213. Both a bottom surface A1 of the bonding structure 35 and a surface A2 that is of the bottom plate 211 and that is away from the side plate 213 may be connected to the lens assembly 40 located below the variable aperture 20.

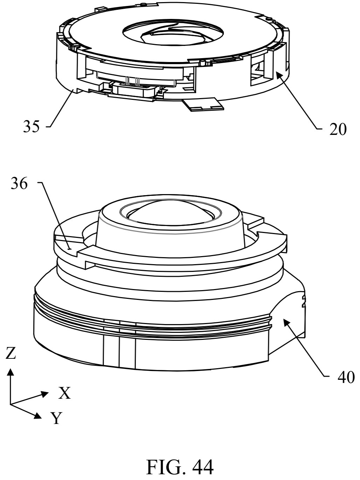

In this way, surfaces (that is, the surfaces A1 and A2 of the fastening base 21) that are of the variable aperture 20 and that are connected to the lens assembly 40 may be uneven surfaces. On this basis, as shown in FIG. 44, the lens assembly 40 may have a bonding groove 36 that fits the bonding structure 35. Therefore, a surface that is of the lens assembly 40 and that is connected to the variable aperture 20 may also be an uneven surface that matches the foregoing surfaces A1 and A2, so that when the variable aperture 20 is bonded to the lens assembly 40, stability of the connection between the variable aperture 20 and the lens assembly 40 can be improved.

For example, further as shown in FIG. 43, a vertical projection of the bonding structure 35 on the bottom plate 211 is in a shape of a sector, the sector has a first arc-shaped edge 351 and a second arc-shaped edge 352, and an arc length of the first arc-shaped edge 351 may be greater than an arc length of the second arc-shaped edge 352. The first arc-shaped edge 351 is provided farther away from the boss 212 than the second arc-shaped edge 352. In this case, the bonding structure 35 may be a dovetail structure. As shown in FIG. 44, the bonding groove 36 that is of the lens assembly 40 and that fits the bonding structure 35 may be a dovetail groove that matches the dovetail structure.

Based on this, when the camera module 10 works, the variable aperture 20 is in a horizontal plane (a surface perpendicular to the optical axis of the variable aperture 20), and the bonding structure 35 and the bonding groove 36 that fit each other and that are of a dovetail shape can prevent cutting in the horizontal plane in both the X direction and the Y direction. In addition, in a rotation direction of the blade 23 in the variable aperture 20, a contact area between a side wall of the dovetail structure and the dovetail groove is relatively large, and the variable aperture 20 may be effectively limited, to limit a position of the variable aperture 20.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A variable aperture (20), comprising:
a fastening base (21), having a first light transmitting hole (101), wherein the fastening base (21) comprises a bottom plate (211) and a side plate (213), the side plate (213) is disposed on the bottom plate (211) and encloses a periphery of the first light transmitting hole (101), the side plate (213) is provided with a first opening (130), and the first opening (130) penetrates the side plate (213) in a direction perpendicular to the bottom plate (211);
a rotating carrier (22), located in the fastening base (21) and rotatably connected to the fastening base (21), wherein the rotating carrier (22) comprises an annular portion (221) and a convex lug (222), the annular portion (221) is disposed around the periphery of the first light transmitting hole (101), the convex lug (222) is disposed on a side wall of the annular portion (221), the convex lug (222) is located in the first opening (130), and a side surface of the convex lug (222) is exposed from the first opening (130);
a plurality of blades (23), disposed on the rotating carrier (22), wherein the blades (23) are slidably connected to the annular portion (221) and rotatably connected to the fastening base (21), the plurality of blades (23) are distributed annularly to enclose an aperture hole (100), and the aperture hole (100) is in communication with the first light transmitting hole (101); and
at least one drive component (24), wherein the drive component (24) comprises:
a magnet component (241), disposed on a side that is of the convex lug (222) and that is away from the blade (23); and
a coil (242), disposed on a side that is of the magnet component (241) and that faces the fastening base (21).

2. The variable aperture (20) according to claim 1, wherein the fastening base (21) further comprises:
a boss (212), disposed on the bottom plate (211), wherein the first light transmitting hole (101) penetrates the boss (212) and the bottom plate (211), the side plate (213) is disposed around a periphery of the boss (212), the side plate (213), a side wall of the boss (212), and the bottom plate (211) enclose a first mounting groove (110), and at least a part of the rotating carrier (22) is located in the first mounting groove (110).

3. The variable aperture (20) according to claim 2, wherein
the annular portion (221) is located in the first mounting groove (110) and disposed around the periphery of the boss (212); and
the first opening (130) is in communication with the first mounting groove (110).

4. The variable aperture (20) according to any one of claims 1 to 3, wherein there is a stroke gap between the convex lug (222) and a side wall of the first opening (130).

5. The variable aperture (20) according to any one of claims 1 to 4, wherein
the variable aperture (20) further comprises a flexible printed circuit FPC (27), the FPC (27) is disposed on a side that is of the fastening base (21) and that is away from the blade (23), and the FPC (27) is connected to the fastening base (21); and
the coil (242) passes through the fastening base (21) and is disposed on a side that is of the FPC (27) and that faces the rotating carrier (22), and the coil (242) is connected to the FPC (27).

6. The variable aperture (20) according to claim 5, wherein the fastening base (21) comprises:
a first plastic part (2101); and
a first metal support (2102), embedded in the first plastic part (2101), wherein the first metal support (2102) and the first plastic part (2101) are connected to form a first integrated mechanical part (2100), and the first metal support (2102) is grounded on the FPC (27).

7. The variable aperture (20) according to claim 6, wherein the first plastic part (2101) has a first hollow zone (140), a part of a surface of the first metal support (2102) is exposed from the first hollow zone (140), and the surface is used to create a product identifier.

8. The variable aperture (20) according to any one of claims 1 to 4, wherein
the coil (242) is disposed on the fastening base (21) and directly connected to the fastening base (21).

9. The variable aperture (20) according to claim 8, wherein the fastening base (21) comprises:
a first plastic part (2101);
a first metal support (2102), embedded in the first plastic part (2101);
a metal ground trace (2103), embedded in the first plastic part (2101), wherein the metal ground trace (2103) is connected to the first metal support (2102);
a metal signal trace (2104), embedded in the first plastic part (2101), wherein the metal signal trace (2104), the metal ground trace (2103), the first metal support (2102), and the first plastic part (2101) are connected to form a first integrated mechanical part (2100);
a metal ground terminal (2105), disposed outside the first plastic part (2101), wherein the metal ground terminal (2105) is connected to the metal ground trace (2103); and
a metal signal terminal (2106), disposed outside the first plastic part (2101), wherein the metal signal terminal (2106) is connected to the metal signal trace (2104).

10. The variable aperture (20) according to claim 6 or 9, wherein
the variable aperture (20) further comprises a cover plate (25), the cover plate (25) is disposed on a side that is of the plurality of blades (23) and that is away from the rotating carrier (22), the cover plate (25) covers the fastening base (21), and the cover plate (25) comprises:
a third plastic part (2501);
a third metal support (2502), embedded in the third plastic part (2501), wherein the third metal support (2502) and the third plastic part (2501) are connected to form a third integrated mechanical part (2500), and the third metal support (2502) is connected to the first metal support (2102); and
a first soma (2503), stacked on a side that is of the third integrated mechanical part (2500) and that is away from the blade (23).

11. The variable aperture (20) according to claim 10, wherein the third metal support (2502) is electrically connected to the first metal support (2102), and the third metal support (2502) is grounded through the first metal support (2102).

12. The variable aperture (20) according to claim 10 or 11, wherein
the cover plate (25) has a second light transmitting hole (102), and the second light transmitting hole (102) is in communication with the aperture hole (100); and
the third metal support (2502) has a plurality of hollow portions (25011) that penetrate the third metal support (2502), and the hollow portions (25011) are disposed on a periphery of the second light transmitting hole (102).

13. The variable aperture (20) according to any one of claims 10 to 12, wherein the variable aperture (20) further comprises:
a second soma (26), stacked on a side that is of the plurality of blades (23) and that faces the fastening base (21), wherein the second soma (26) is provided with a third light transmitting hole (103), and the third light transmitting hole (103) is in communication with the aperture hole (100).

14. The variable aperture (20) according to claim 13, wherein
a same material is used for the second soma (26), the first soma (2503), and the blade (23); and a specular reflectance G and an optical density value OD of the material, and an L value, an a value, and a b value in a color triplet of the material are respectively as follows: G≤0.3%; OD≥5.0; L≤8; |a|≤1; and |b|≤1.

15. The variable aperture (20) according to claim 14, wherein a modulus of the material of the second soma (26), the first soma (2503), and the blade (23) is greater than or equal to 3000 MPa, a yield strength is greater than or equal to 80 MPa, and an elongation at break is greater than or equal to 10%.

16. The variable aperture (20) according to any one of claims 10 to 15, wherein a part that is of the fastening base (21) and that is disposed around a periphery of the rotating carrier (22) protrudes from a surface that is of the cover plate (25) and that is away from the blade (23).

17. The variable aperture (20) according to any one of claims 1 to 9, wherein the drive component (24) further comprises:
a first magnetic conductive sheet (243), disposed on a side that is of the bottom plate (211) and that faces the rotating carrier (22), wherein the first magnetic conductive sheet (243) is used for attraction with the magnet component (241), and a vertical projection of the first opening (130) on the side wall of the boss (212) overlaps a vertical projection of the first magnetic conductive sheet (243) on the side wall of the boss (212).

18. The variable aperture (20) according to claim 17, wherein the bottom plate (211) is provided with a second mounting groove (111), the first magnetic conductive sheet (243) is located in the second mounting groove (111), and the second mounting groove (111) is provided at an end that is of the coil (242) and that is away from the side plate (213).

19. The variable aperture (20) according to claim 17 or 18, wherein
the drive component (24) comprises two first magnetic conductive sheets (243), and an end that is of the coil (242) and that faces the boss (212) is located between the two first magnetic conductive sheets (243).

20. The variable aperture (20) according to any one of claims 2 to 19, wherein the side wall of the boss (212) comprises a first semi-ring side wall (2121) and a second semi-ring side wall (2122) that are connected; and
the variable aperture (20) further comprises:
a second magnetic conductive sheet (29), disposed on the first semi-ring side wall (2121), wherein the second magnetic conductive sheet (29) is used for attraction with the magnet component (241), and a vertical projection of the first opening (130) on the first semi-ring side wall (2121) overlaps a vertical projection of the second magnetic conductive sheet (29) on the first semi-ring side wall (2121); and
a first rolling part (31), disposed between the rotating carrier (22) and the bottom plate (211), wherein the first rolling part (31) is located on a side on which the second semi-ring side wall (2122) is located, the rotating carrier (22) and the fastening base (21) are in contact with the first rolling part (31), and the rotating carrier (22) is rotatably connected to the fastening base (21) through the first rolling part (31).

21. The variable aperture (20) according to claim 20, wherein the variable aperture (20) further comprises:
a second rolling part (32), disposed between the rotating carrier (22) and the bottom plate (211), wherein the second rolling part (32) is located on a side on which the first semi-ring side wall (2121) is located, there is an adjustment gap H1 between the second rolling part (32) and the rotating carrier (22), and 30 µm≤H1≤70 µm.

22. The variable aperture (20) according to claim 21, wherein the variable aperture (20) comprises:
two drive components (24) that are respectively a first drive component (2401) and a second drive component (2402), wherein the first drive component (2401) is disposed on the side on which the first semi-ring side wall (2121) is located, and the second drive component (2402) is disposed on the side on which the second semi-ring side wall (2122) is located;
two first rolling parts (31), wherein the second drive component (2402) is located between the two first rolling parts (31); and
two second rolling parts (32), wherein the first drive component (2401) is located between the two second rolling parts (32).

23. The variable aperture (20) according to any one of claims 1 to 22, wherein the rotating carrier (22) comprises:
a second plastic part (2201); and
a second metal support (2202), embedded in the second plastic part (2201), wherein the second metal support (2202) and the second plastic part (2201) are connected to form a second integrated mechanical part (2200), and the magnet component (241) and the second metal support (2202) are connected to each other and attract each other.

24. The variable aperture (20) according to any one of claims 1 to 23, wherein in the same drive component (24), a vertical projection of the magnet component (241) on the rotating carrier (22) overlaps a vertical projection of the coil (242) on the rotating carrier (22).

25. The variable aperture (20) according to any one of claims 1 to 24, wherein the fastening base (21) further comprises:
a bonding structure (35), disposed on a surface that is of the bottom plate (211) and that is away from the side plate (213).

26. The variable aperture (20) according to claim 25, wherein
a vertical projection of the bonding structure (35) on the bottom plate (211) is in a shape of a sector, the sector has a first arc-shaped edge (351) and a second arc-shaped edge (352), and an arc length of the first arc-shaped edge (351) is greater than an arc length of the second arc-shaped edge (352); and
the first arc-shaped edge (351) is provided farther away from the boss (212) than the second arc-shaped edge (352).

27. A camera module (10), comprising:
a lens assembly (40); and
the variable aperture (20) according to any one of claims 1 to 26, wherein the variable aperture (20) is disposed on a light inlet side of the lens assembly (40).

28. An electronic device (01), comprising:
a rear housing (03) and the camera module (10) according to claim 27, wherein the camera module (10) is disposed on the rear housing (03).
